# EUROPÄISCHE PATENTSCHRIFT

(11) **EP 2 603 535 B1**
(45) Veröffentlichungstag und Bekanntmachung des Hinweises auf die Patenterteilung: **25.01.2017**
(21) Anmeldenummer: 11748615.9
(22) Anmeldetag: 10.08.2011
(51) Int. Cl.: C08G 18/08, C08G 18/12, C08G 18/32, C08G 18/34, C08G 18/42, C08G 18/61, C08G 77/12, C08G 77/20, C08G 77/42, C08G 77/445, C08G 77/455, C08G 77/458, C09D 175/04, C09D 175/06, C09D 175/12, C09D 183/10, C09D 7/12

(54) **ELEKTROISOLIERLACKE AUS MODIFIZIERTEN POLYMEREN UND DARAUS HERGESTELLTE ELEKTRISCHE LEITER MIT VERBESSERTER GLEITFÄHIGKEIT**
ELECTRICALLY INSULATING VARNISHES PREPARED FROM MODIFIED POLYMERS AND ELECTRICAL CONDUCTORS HAVING IMPROVED LUBRICITY PREPARED THEREFROM
VERNIS ELECTROISOLANTS PREPARES DE POLYMERES MODIFIES ET CONDUCTEURS ELECTRIQUES A GLISSEMENT AMELIORE PREPARES A PARTIR DE CEUX-CI

(30) Priorität: 10.08.2010 DE 102010039168
(43) Veröffentlichungstag der Anmeldung: 19.06.2013
(73) Patentinhaber: Schwering & Hasse Elektrodraht GmbH, 32676 Lügde (DE)
(72) Erfinder: BREMSER, Wolfgang, 33100 Dahl (DE); RESSEL, Jörg, 33098 Paderborn (DE); REICHER, Johann, 31848 Bad Münder (DE)
(74) Vertreter: Rohmann, Michael
(86) Internationale Anmeldenummer: PCT/EP2011/063796
(87) Internationale Veröffentlichungsnummer: WO 2012/020067

(56) Entgegenhaltungen:
- EP-A1- 0 447 789
- EP-A1- 1 176 611
- EP-A2- 0 217 364
- BE-A7- 771 740
- CN-A- 101 691 466
- DE-A1- 2 000 638
- DE-A1- 4 217 603
- JP-A- 5 101 713
- JP-A- 6 166 741
- JP-A- 9 048 920
- JP-A- 9 087 532
- JP-A- 61 185 527
- JP-A- 2000 026 724
- US-A- 3 423 479
- US-A- 3 583 885
- US-A- 3 686 030
- US-A- 3 779 991
- US-A- 4 693 936
- US-A1- 2001 020 081
- US-A1- 2002 041 960
- US-A1- 2003 215 650
- US-A1- 2004 052 649
- US-A1- 2006 065 427
- US-A1- 2007 298 255

## Beschreibung

Die vorliegende Erfindung betrifft Elektroisolierlacke, die ein Polymer enthalten, umfassend ein Basispolymer und Modifizierungseinheiten, die nach Aushärtung des Polymers mit dem Basispolymer unverträglich sind und zur Bildung von separaten Phasen an der Oberfläche führen, sowie Verfahren zu deren Herstellung. Die Elektroisolierlacke weisen einen geringen Reibungskoeffizienten und Reibungswiderstand auf und eignen sich vorzugsweise zur Beschichtung von Drähten.

Elektroisolierlacke werden zur Beschichtung von Drähten, die als elektrische Leiter in elektrischen Bauteilen wie Spulen, Rotoren und Statoren verwendet werden, eingesetzt. Um diese elektrischen Bauteile herzustellen wird der beschichtete Draht mit automatisierten Wickelmaschinen aufgewickelt. Dabei sollten die lackierten elektrischen Drähte an den Kanten der elektrischen Bauteile nicht verletzt werden und sich leicht in die Nuten der Bauteile einfügen, damit eine hohe Packungsdichte des Drahtes in den elektrischen Bauteilen erreicht werden kann. Hohe Packungsdichten sind erforderlich, um eine optimale Induktionsleistung zu erreichen. Eine hohe Packungsdichte ist außerdem erstrebenswert, da elektrische Maschinen wie beispielsweise Elektromotoren, die solche elektrischen Bauteile enthalten, mehr und mehr miniaturisiert werden, da eine gestiegene Nachfrage nach immer kleineren Geräten und Bauteilen besteht.

Um daher Fehllagen des Drahtes in den elektrischen Bauteilen zu vermeiden und hohe Packungsdichten zu erreichen, müssen die isolierten elektrischen Leiter eine gute Gleitfähigkeit aufweisen. Eine gute Gleitfähigkeit ermöglicht ferner die Verarbeitung des Drahtes in modernen Hochgeschwindigkeitswickelautomaten, in welchen Draht-, Brems- und Führungssysteme den Draht extrem beanspruchen. Eine gute Gleitfähigkeit des Drahtes und das damit verbundene Abgleiten der Drähte aneinander verbessert das Wickelbild auf der Spule. Aus diesen Gründen hat sich das Merkmal der Gleitfähigkeit von Drähten zu einem wichtigen Qualitätsmerkmal für die Herstellung und Verarbeitung von isolierten Drähten entwickelt.

Um eine gute Gleitfähigkeit von Drähten zu erreichen wird herkömmlicherweise zunächst ein Elektroisolierlack auf Basis von selbstvernetzenden Polyestern und Polyesterimiden, Polyimiden und Polyamidimiden und Polyamiden und Polyestern, die mit verkappten Polyisocyanataddukten vernetzt werden, aufgetragen. Nach dem Auftragen der eigentlichen Elektroisolierschicht auf den Draht wird als äußere Schicht ein Gleitmittel aufgetragen. Als Gleitmittel werden natürliche Wachse, Montanwachse, Polyethylenwachse und Copolymere mit Propylenpolymeren aus höheren α-Olefinen, Polypropylenoxide, Ester aus höher funktionellen Polyolen und längerkettige Fettsäuren verwendet. Die Verwendung solcher Gleitmittel kann allerdings problematisch sein, da insbesondere Gleitmittel auf Basis von Kohlenwasserstoffen, Fettsäureestern und Polypropylenoxiden bei den für Elektroisolierlacke üblichen sehr hohen Applikationstemperaturen von mehr als 450 °C nicht stabil sind. Gleitmittel auf Basis von Paraffinwachs liegen gewöhnlich als Lösung in Testbenzin vor. Solche Gleitmittel sind jedoch aufgrund des verdampfenden Testbenzins aus Umweltschutzgründen sowie aus Gesundheitsschutzgründen problematisch.

In WO 2007/045575 wird ein Gleitmittel für Lackdrähte auf Basis einer Polytetrafluorethylen-Dispersion beschrieben, das verbesserte Reibungskoeffizienten aufweisen soll und umweltverträglich ist. Allerdings muss das Gleitmittel in einem separaten Prozessschritt auf den bereits lackierten Draht aufgetragen werden.

Ein weiterer Ansatz um Elektroisolierlacke mit guter Gleitfähigkeit bereitzustellen, besteht darin, dem Lack ein Gleitmittel einzumischen. Einen solchen Lack beschreibt z.B. EP 0 823 120, worin der Lack als internes Gleitmittel Polyethylenwachs enthält.

Bei einem weiteren Ansatz zur Verbesserung der Gleitfähigkeit von Elektroisolierlacken werden die im Lack enthaltenen Polymere mit Komponenten funktionalisiert. EP 0 033 224 und EP 0 072 178 beschreiben Elektroisolierlacke auf Basis von Polymeren, z.B. Polyamidimiden, die mit terminalen längerkettigen Alkylgruppen modifiziert sind.

Weiterhin sind Elektroisolierlacke bekannt, bei denen Polysiloxane in den Lack physikalisch eingemischt werden oder wobei die im Lack enthaltenen Polymere mit Polysiloxanen funktionalisiert werden. EP 1 176 611 beschreibt beispielsweise isolierte Drähte, die ein Polyamidimidharz aufweisen, das terminal mit Alkoxy- oder Aryloxy-Siloxanen, die eine Glycidether-Gruppe enthalten, modifiziert ist. EP 0 447 789 beschreibt Isolierlacke, die ein mit Polysiloxanen funktionalisiertes Copolymer enthalten. Es findet sich keine nähere Beschreibung des verwendeten Polysiloxanes. DE 20 00 638 (US 3,632,440) beschreibt ebenfalls ein Isoliermaterial, bei dem Polysiloxane einem Polymerharz zugemischt werden oder das Polymerharz durch Polysiloxane funktionalisiert wird. Eine Funktionalisierung des Polymerharzes mit lankettigen Polysiloxanen wird nicht gezeigt. US 2003/0215650 beschreibt die Modifikation von Polymerverbindungen mit kurzkettigen Polysiloxanen. Eine Aufgabe der Erfindung ist es, einen Elektroisolierlack bereitzustellen, der sehr gute Gleitfähigkeit an der Oberfläche in Verbindung mit hoher Temperaturbeständigkeit, Flexibilität und guten dielektrischen Eigenschaften aufweist.

Diese Aufgabe wird erfindungsgemäß durch Bereitstellen eines Elektroisolierlacks gelöst, der ein funktionalisiertes Polymer enthält, umfassend ein Basispolymer und Modifizierungseinheiten, die nach Aushärten, insbesondere thermischem Aushärten, des Polymers mit dem Basispolymer unverträglich sind, wobei das Basispolymer ausgewählt ist aus der Gruppe bestehend aus Polyamidimiden, Polyesterimiden, Polyamiden, Polyurethanen, Polyimiden, Polyesteramidimiden, Polyepoxiden, Mischungen oder Kombinationen davon. Bei den Modifizierungseinheiten handelt es sich um Polydialkylsiloxane, welche 40 bis 500 Si-Einheiten aufweisen. Die Modifizierungseinheiten sind nach einer Aushärtung bzw. Filmbildung mit dem Basispolymer unverträglich, sodass eine Selbststrukturierung der Oberfläche erfolgt. Dabei wird eine vom Basispolymer separate Phase gebildet wird, die insbesondere an der äußeren Oberfläche des ausgehärteten Lackfilms vorliegt und die Gleitfähigkeitseigenschaften des Lackfilms verbessert.

Die Erfindung kombiniert die vorteilhaften Eigenschaften eines Basispolymers, z.B. chemische Stabilität oder/und Härte, mit den vorteilhaften Eigenschaften der Modifizierungseinheiten, z.B. Haftverminderung oder/und Reibungsverminderung. Da die Modifizierungseinheiten chemisch fixiert und insbesondere kovalent an das Basispolymer gebunden sind, wird eine Abgabe der Modifizierungseinheiten an die Umgebung und insbesondere ein Ausbluten verhindert.

Der erfindungsgemäße Elektroisolierlack weist somit insbesondere eine Phasenseparation an der Oberfläche auf, also separate Bereiche an der Oberfläche gebildet aus Basispolymer, und andere separate Bereiche gebildet aus Modifizierungseinheiten. Es wurde gefunden, dass der erfindungsgemäße ausgehärtete Lack eine strukturierte anisotropische Oberfläche bestehend aus polarer Matrix und nicht polaren separaten Bereichen aufweist. Es konnten auch Unterschiede in den mechanischen Eigenschaften festgestellt werden, nämlich insbesondere eine rigide polare Matrix, insbesondere eine rigide polare Basispolymermatrix und besonders bevorzugt eine rigide polare Polyamidimidmatrix und weiche, "flüssigkeitsartige" separate Bereiche, gebildet aus Modifizierungseinheiten, insbesondere Polysiloxanen und noch mehr bevorzugt PDMS-Phasenseparationen.

Elektroisolierlacke liegen gewöhnlich als kolloidale Lösung oder als Dispersion von Polymerpartikeln in einem Lösungsmittel vor. Die Polymerpartikel können in Form von kolloidalen Partikeln oder in Form von Gelpartikeln vorliegen. Gelpartikel können Modifizierungseinheiten an der Außenseite aufweisen, z.B. in bürstenartiger (Brush-)-Struktur. Gegebenenfalls sind weitere Komponenten wie Additive vorhanden.

Die im erfindungsgemäßen Elektroisolierlack enthaltenen Polymere umfassen ein Basispolymer, das mit Modifizierungseinheiten funktionalisiert bzw. modifiziert ist. Die Basispolymere werden aus der Gruppe bestehend aus Polyamidimiden, Polyesterimiden, Polyamiden, Polyurethanen, Polyimiden, Polyesteramidimiden, Polyepoxiden, Mischungen oder Kombinationen davon ausgewählt. In einer bevorzugten Ausführungsform ist das Basispolymer ein Polyamidimid oder/und ein Polyesterimid, ganz bevorzugt ein Polyamidimid. Die Herstellung solcher Polymere ist bekannt.

Das Basispolymer kann in Abhängigkeit der gewünschten Verwendung gewählt werden. Bei der Verwendung in Elektroisolierlacken finden vorzugsweise Polyamidimide oder/und Polyesterimide Anwendung.

Die Polymere gemäß der vorliegenden Erfindung enthalten ein Basispolymer, das mindestens eine Modifizierungseinheit aufweist. Bei der Modifizierungseinheit handelt es sich um ein Polydialkylsiloxan und noch mehr bevorzugt um ein Polydimethylsiloxan. Die Modifizierungseinheiten sind insbesondere kovalent an das Basispolymer gekoppelt.

Die Elektroisolierlacke beinhalten neben dem Polymer auch Lösungsmittel, die im Folgenden beschrieben werden. Der Festkörperanteil des Polymers im Elektroisolierlack beträgt üblicherweise mindestens 10 %, mindestens 20%, mindestens 25 %, mindestens 30%, mindestens 35% und bis zu 45%, 50%, 60% oder 70% (Masse/Masse). Als weitere Bestandteile kann der Elektroisolierlack Additive enthalten, die im Folgenden beschrieben sind.

Überraschenderweise wurde festgestellt, dass in dem ausgehärteten Elektroisolierlack, der durch Aushärten, insbesondere thermisches Aushärten erhältlich ist, an der Oberfläche separate Bereiche entstehen. Dadurch wird der Reibungskoeffizient und der Reibungswiderstand der ausgehärteten Elektroisolierlacke verbessert. Gleichzeitig bleiben auch gute Temperaturbeständigkeit und Flexibilität erhalten.

Modifizierungseinheiten gemäß der vorliegenden Erfindung zeichnen sich dadurch aus, dass bei Aufbringen eines Lacks, der ein Polymer mit solchen Einheiten enthält, auf eine Metallplatte, z.B. eine Aluminiumplatte, oder auf eine Glasplatte in einer Dicke von 5 µm bis 20 µm und nach thermischer Aushärtung, bei einer Einbrenntemperatur von größer 100 °C, z.B. 150 °C, 200 °C, 220 °C, 250 °C oder 300 °C, insbesondere von 250 °C und einer Einbrenndauer von 2 bis 15 Minuten, bevorzugt 10 Minuten, separate Bereiche an der Oberfläche vorliegen. Der Anteil dieser Bereiche bezüglich der Gesamtoberfläche kann z.B. durch Rasterkraftmikroskopie bestimmt werden.

Vorzugsweise beträgt der Anteil der separaten Bereiche auf der Oberfläche, in denen sich Modifizierungseinheiten befinden, - insbesondere bei einem Anteil der Bausteine mit Modifizierungseinheiten von 20 Massen-% bezogen auf das gesamte Polymer - mindestens 5 Flächen-%, mindestens 15 Flächen-%, mindestens 20 Flächen-%, mindestens 30 Flächen-%, mindestens 40 Flächen-%, mindestens 50 Flächen-% und bis zu 60 Flächen-%, bis zu 70 Flächen-%, bis zu 80 Flächen-%, bis zu 90 Flächen-% oder bis zu 95 Flächen-%, bezüglich der gesamten Oberfläche. Entsprechend beträgt der Anteil an Bereichen auf der Oberfläche, in denen sich Basispolymer befindet, mindestens 5 Flächen-%, mindestens 15 Flächen-%, mindestens 20 Flächen-%, mindestens 30 Flächen-%, mindestens 40 Flächen-%, mindestens 50 Flächen-% und bis zu 60 Flächen-%, bis zu 70 Flächen-%, bis zu 80 Flächen-%, bis zu 90 Flächen-% oder bis zu 95 Flächen-%, bezüglich der gesamten Oberfläche.

Die einzelnen separaten Bereiche weisen vorzugsweise eine Größe von mindestens 0,1 µm, bevorzugt mindestens 0,2 µm auf. Die Größe der separaten Bereiche kann sehr stark variieren und auch im Bereich von bis zu mehreren µm, insbesondere bis zu 10 µm, vorzugsweise bis zu 5 µm liegen.

Die mit dem Basispolymer bei Aushärtung bzw. Filmbildung unverträglichen Modifizierungseinheiten sind langkettige Polysiloxane. Polysiloxane sind Ketten aus Siliciumatomen, die mit Sauerstoffatomen verknüpft sind. Die freien Valenzen des Siliciums sind durch Alkylketten besetzt, die gegebenenfalls durch Halogen, OH, COOH und/oder Amino substituiert sind. Bevorzugte Seitenketten sind C₁-C₆-Alkyl, insbesondere Methyl. Entsprechend werden als Modifizierungseinheiten Polydialkylsiloxane (PDAS) verwendet und insbesondere Polydimethylsiloxane (PDMS) sind besonders bevorzugt.

Die Endgruppen der Polysiloxane können unabhängig voneinander Reste ausgewählt aus Alkyl, Alkoxy, Alkoxyalkyl, Alkinyl, Aryl oder Heteroaryl sein, die gegebenenfalls durch Halogen, OH, COOH, Cycloalkyl, Epoxide und/oder Amino substituiert sein können. Die Polysiloxane sind über eine oder beide Endgruppen und/oder eine oder mehrere Seitenketten mit dem Basispolymer verknüpft. Die Verknüpfung erfolgt über mindestens eine reaktionsfähige Gruppe, die z.B. OH-, SH-, COOH-, NH₂-, CN-, OCN-, Anhydrid-, Epoxy- und/oder Halogengruppen umfasst und mit einer komplementären reaktionsfähigen Gruppe auf dem Basispolymer reagiert hat. Es können eine oder mehrere reaktionsfähige Gruppen, bevorzugt eine oder zwei reaktionsfähige Gruppen an einem oder an beiden Enden des Siloxans vorliegen. Besonders bevorzugt liegen zwei reaktionsfähige Gruppen an einem Ende des Polysiloxans vor.

Die Einführung der Modifizierungseinheiten in das Basispolymer erfolgt vorzugsweise über modifizierte Bausteine, z.B. Monomere, die die Modifizierungseinheiten, verknüpft durch reaktionsfähige Gruppen, umfassen, die mit unmodifizierten Bausteinen einer Polymerisationsreaktion unterzogen werden.

In einer bevorzugten Ausführungsform können Modifizierungsinheiten mit einer reaktionsfähigen Gruppe in das zu funktionalisierende Polymer eingebracht werden, indem man sie z.B. zunächst in einem molaren Verhältnis von 1:1 mit einer trimeren Monomereinheit, wie beispielsweise einem trimeren Isocyanataddukt umsetzt. Die dabei entstehende Verbindung kann anschließend mit z.B. der verbleibenden Isocyanatgruppe mit den reaktionsfähigen Gruppen der weiteren Monomere reagieren und so ein Kettensegment eines funktionalisierten Polymers bilden.

Polysiloxane bestehen aus mehreren Siloxan-Einheiten (Si-Einheiten), die über Sauerstoffatome miteinander verknüpft sind. Die Polysiloxane können 40 bis 500 Si-Einheiten aufweisen, bevorzugt 40 bis 400 Si-Einheiten, besonders bevorzugt 50 bis 200 Si-Einheiten und am stärksten bevorzugt 60 bis 150 Si-Einheiten. Unter langkettigen Polysiloxanen werden insbesondere Polysiloxane verstanden, die mindestens 40 und insbesondere mindestens 60 Si-Einheiten aufweisen und bis zu 500, bevorzugt bis zu 300, insbesondere bis zu 200 und am meisten bevorzugt bis zu 150 Si-Einheiten aufweisen.

In einer bevorzugten Ausführungsform sind die Polysiloxane Polydimethylsiloxane (PDMS). Geeignete Polydimethylsiloxane sind beispielsweise 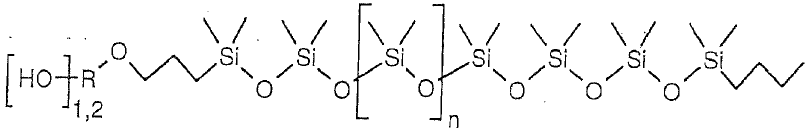 α-Hydroxyalkoxy-ω-alkylpolydimethylsiloxane (Formel I), 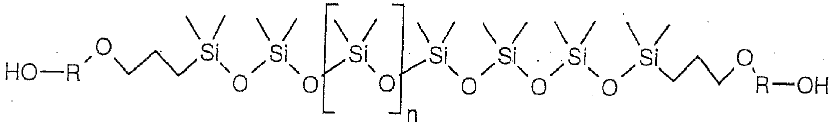 bis-(Hydroxyalkoxyethyl)-polydimethylsiloxane (Formel II), 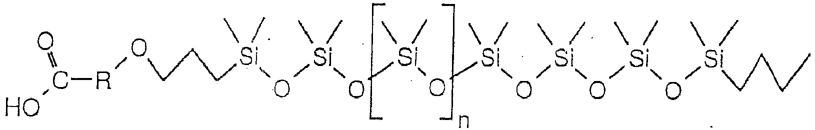 α-Carboxyalkoxypropyl-ω-butyl-polydimethylsiloxane (Formel III) und

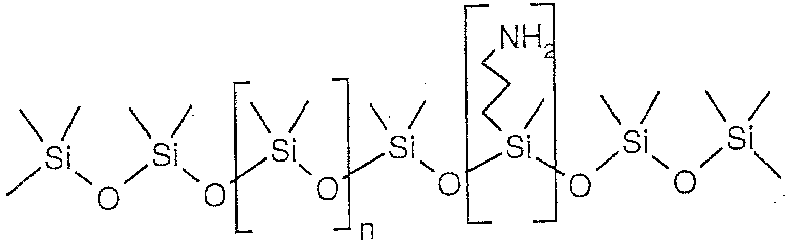

Aminopropylpolydimethylsiloxane (Formel IV). n wird so gewählt, um Kettenlängen im oben genannten Bereich zu geben. R stellt einen Alkylenrest dar, insbesondere einen Alkylenrest mit 1 bis 30, vorzugsweise mit 2 bis 6 Kohlenstoffatomen.

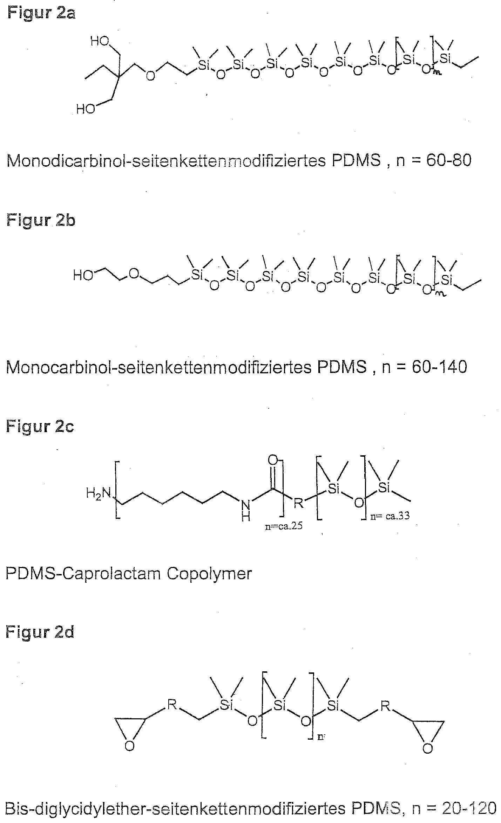

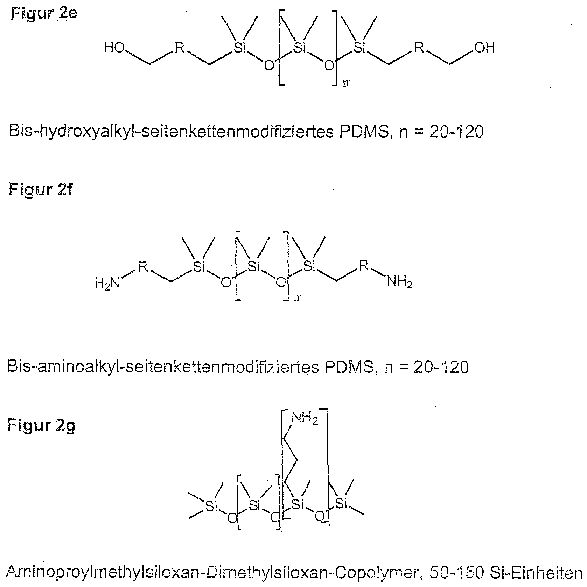

Vorzugsweise werden mono- oder difunktionelle Polydimethylsiloxane verwendet. Besonders bevorzugt ist ein α-difunktionelles Polydimethylsiloxan wie etwa in Formel I dargestellt. In Figur 2 sind beispielhaft einige Polydimethylsiloxane gezeigt. In einer besonders bevorzugten Ausführungsform ist das Polydimethylsiloxan α-(2,2-Dimethylolbutoxy)-propyl-ω-n-butylpoly-dimethylsiloxan. Die Herstellung solcher Polydimethylsiloxane ist bekannt, wie beispielsweise in EP 0 430 216 beschrieben.

Aufgrund ihrer relativ großen Molmasse verringern die Polysiloxane selbst bei höheren Massenanteilen die mittlere Molmasse der Polymere, insbesondere von Polyamidimiden und Polyimiden, weniger als kleinere molekulare Bausteine bei vergleichbaren Massenanteilen. Daher werden die Filmeigenschaften des Elektroisolierlacks durch Einbringen der Modifizierungseinheiten praktisch nicht beeinträchtigt.

Für die Anordnung der Modifizierungseinheiten, z.B. der Polysiloxane, und dem Basispolymer im erfindungsgemäßen Polymer gibt es verschiedene Ausführungsformen.

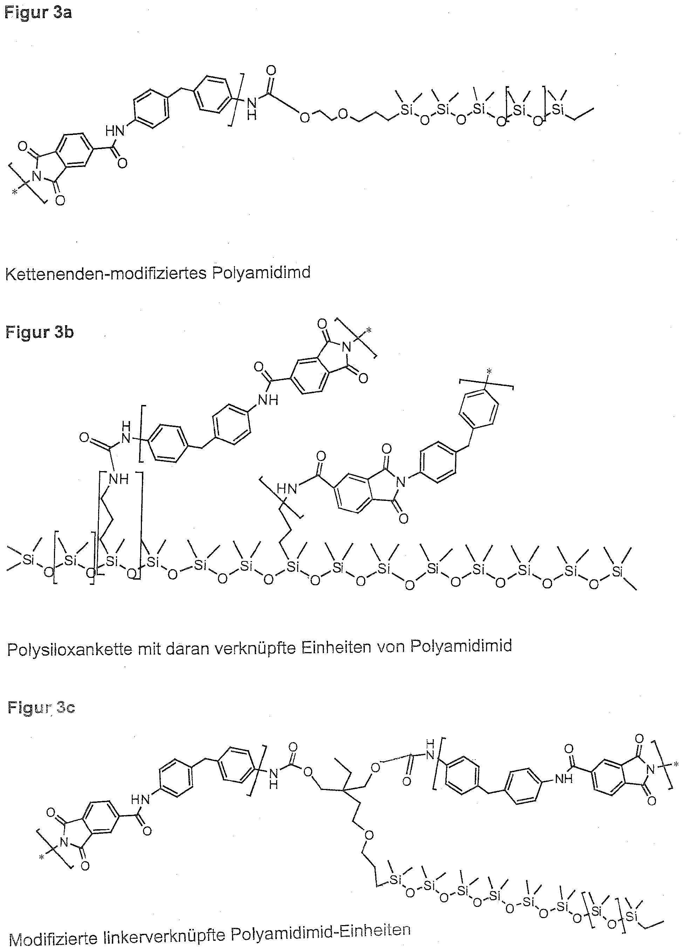

Modifizierungseinheiten können mit dem Basispolymer Kettenendenmodifizierte Polymere (siehe z.B. Figur 3a) oder eine Polymerkette der Modifizierungseinheiten mit daran verknüpften Einheiten des Basispolymers (siehe z.B. Figur 3b) bilden.

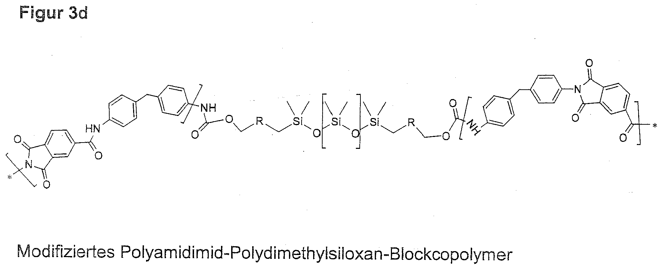

Di- oder polyfunktionelle Modifizierungseinheiten können mit Einheiten des Basispolymers ein linkerverknüpftes Polymer (siehe z.B. Figur 3c) oder ein Blockcopolymer (siehe z.B. Figur 3d) bilden. Vorzugsweise wird dabei die Modifizierungseinheit, die an einer der Endgruppe zwei reaktionsfähige Gruppen und an der anderen keine reaktionsfähige Gruppe aufweist, verwendet. Dies führt dann zu einem Einfügen der Modifizierungsinheit als Linker in das Basispolymer (siehe Figur 3c). Alternativ kann eine α,ω-difunktionelle Einheit verwendet werden, die an jeder Endgruppe reaktionsfähig Gruppen aufweist. Dies führt dann zur Bildung eines Blockcopolymers (siehe auch Figur 3d).

In einer bevorzugten Ausführungsform wird linkerverknüpftes Basispolymer, insbesondere linkerverknüpftes Polyamidimid oder/und Polyesterimid verwendet, wobei Polysiloxan, insbesondere Polydimethylsiloxan, welches vorzugsweise 60 bis 80 Si-Einheiten, z.B. ca. 65 Si-Einheiten, aufweist, als Linker zwischen den Basispolymer-Einheiten, insbesondere Polyamidimidpolymer-Einheiten oder/und Polyesterimid-Einheiten fungiert (siehe Figur 3c).

In einer weiteren bevorzugten Ausführungsform wird endgruppenmodifiziertes Basispolymer, insbesondere endgruppenmodifiziertes Polyamidimid oder/und Polyesterimid verwendet, wobei das verwendete Polysiloxan, insbesondere Polydimethylsiloxan vorzugsweise 60 bis 80 Si-Einheiten, z.B. ca. 65 Si-Einheiten, aufweist (siehe Figur 3a).

In einer weiteren bevorzugten Ausführungsform werden Seitenkettenfunktionalisierte, z.B. mit Aminoalkylgruppen funktionalisierte Modifizierungseinheiten verwendet, die mit reaktionsfähigen Gruppen, z.B. Isocyanatgruppen des Basispolymer, z.B. eines Polyamidimids oder/und eines Polyesterimids, reagieren (siehe auch Figur 3b).

In noch einer weiteren Ausführungsform werden funktionalisierte Polymere verwendet, wobei α,ω-Bis-hydroxyalkylterminierte Polysiloxane, insbesondere α,ω-Bis-hydroxyalkylterminierte Polydimethylsiloxane mit dem Basispolymer, z.B. einem Polyamidimid oder/und einem Polyesterimid, ein Blockcopolymer bilden (siehe Figur 3d).

Besonders vorteilhafte Ergebnisse in Bezug auf die Gleitfähigkeit des Elektroisolierlacks werden erzielt, wenn Kombinationen oder Mischungen von Polymeren mit mehreren verschiedenen Modifizierungseinheiten, die unterschiedliche Kettenlängen, z.B. eine unterschiedliche Anzahl von Si-Einheiten aufweisen, verwendet werden. Besonders bevorzugt ist beispielsweise die Kombination von Polymeren, wobei das erste Polymer mit einem Polysiloxan, insbesondere einem Polydimethylsiloxan mit ca. 60-80 Si-Einheiten funktionalisiert ist und das zweite Polymer mit einem Polysiloxan, insbesondere einem Polydimethylsiloxan mit ca. 120-140 Si-Einheiten funktionalisiert ist. Das Massenverhältnis des ersten und zweiten Polymers beträgt z.B. 10 : 90 bis 90 : 10, bevorzugt 30 : 70 bis 70 : 30, besonders bevorzugt 40 : 60 bis 60 : 40, z.B. 50 : 50.

In einer bevorzugten Ausführungsform wird ein Kettenenden-modifiziertes Basispolymer, insbesondere ein Kettenenden-modifiziertes Polyamidimid oder/und Polyesterimid (siehe Figur 3a), wobei die Endgruppen 120-140 Si-Einheiten, z.B. ca. 132 Si-Einheiten, aufweisen, mit einem linkerverknüpften Basispolymer, insbesondere einem Polyamidimid oder/und Polyesterimid (siehe Figur 3c), wobei die Polysiloxanlinker 50 bis 70 Si-Einheiten, z.B. ca. 65 Si-Einheiten, aufweisen, in einem Massenverhältnis von 0,8 : 1,2 bis 1,2 : 0,8 und insbesondere von 1 : 1 gemischt.

Der Anteil der Bausteine mit Modifizierungseinheiten, bezogen auf das gesamte Polymer, beträgt vorzugsweise 2 bis 70 Massen-%, bevorzugt 5 bis 50 Massen-%, und besonders bevorzugt 10 bis 30 Massen-%. Ein Anteil der Bausteine mit Modifizierungseinheiten von 15-25 Massen-% ist am stärksten bevorzugt. Es können Polymere mit einem höheren Anteil an Modifizierungseinheiten mit Polymeren, die keine Modifizierungseinheiten enthalten, gemischt werden. Es ist auch möglich, Mischungen von Polymeren mit Modifizierungseinheiten, die unterschiedliche Massen-% an Modifizierungseinheiten enthalten, mit verschiedenen Polymeren, die keine Modifizierungseinheiten enthalten, zu verwenden.

Um das Polymer umfassend ein Basispolymer und Modifizierungseinheiten herzustellen, können beispielsweise Polyole, die für die Herstellung von Polyesterimiden verwendet werden, mit Carboxylgruppen und Anhydridgruppen der Modifizierungseinheiten unter Ausbildung von Estern reagieren. Polycarbonsäuren und Polycarbonsäureanhydride, die für die Herstellung von Polyamiden, Polyesterimiden, Polyamidimiden und Polyimiden verwendet werden, können mit OH-Gruppen der Modifizierungseinheiten unter Ausbildung von Estern und mit Aminogruppen unter Ausbildung von Amiden reagieren. Polyisocyanate, die für die Herstellung von Polyesterimiden, Polyamidimiden und Polyimiden verwendet werden, können mit OH-Gruppen der Modifizierungseinheiten unter Ausbildung von Urethan-Gruppen reagieren. Polyisocyanate können ebenfalls mit Aminogruppen der Modifizierungseinheiten unter Ausbildung von Harnstoffgruppen reagieren.

Polyamide für Elektroisolierlacke bestehen vorzugsweise aus aliphatischen Dicarbonsäuren und Diaminen und/oder aus Laktamen bzw. Aminocarbonsäuren.

Als Monomere für die Herstellung von Polyesterimiden werden vorzugsweise Terephthalsäure oder der Dimethylester der Terephthalsäure, Trimellithsäureanhydrid, Glycerin oder Trishydroxyethylisocyanurat und Ethylenglykol verwendet.

Polyimide können aus Tetracarbonsäuredianhydriden, wobei vorzugsweise Pyromellithsäuredianhydrid (PMDA, 1,2,4,5-Benzoltetracarbonsäuredianhydrid), verwendet wird, und aromatischen Diisocyanaten, wobei bevorzugt 4,4'-Diisocyanatodiphenyloxid und/oder 4,4'-Diisocyanatodiphenylmethan (MDI) verwendet werden, hergestellt werden.

Polyamidimide können aus Tricarbonsäureanhydriden, wobei bevorzugt Trimellithsäuredianhydrid (TMA, 1,2,4-Benzoltricarbonsäureanhydrid) verwendet wird, und aromatischen Diisocyanaten, wobei bevorzugt 4,4'-Diisocyanatodiphenylmethan verwendet wird, hergestellt werden.

Ein weiterer Gegenstand der Erfindung ist ein ausgehärteter Elektroisolierlack erhältlich durch Aushärten, insbesondere thermisches Aushärten eines Elektroisolierlacks gemäß der Erfindung, wobei an der Oberfläche des ausgehärteten Elektroisolierlacks separate Bereiche vorliegen.

Ein thermisches Aushärten umfasst dabei insbesondere eine Temperaturbehandlung von 400 °C bis 700 °C, bevorzugt von 450 °C bis 600 °C und noch stärker bevorzugt von 525 °C bis 625 °C.

Ein weiterer Aspekt der vorliegenden Erfindung ist ein Verfahren zur Herstellung des erfindungsgemäßen Elektroisolierlacks, dadurch gekennzeichnet, dass ein erster modifizierter Baustein, z.B. ein Monomer oder ein Präpolymer, der mindestens eine Modifizierungseinheit aufweist, mit mindestens einem zweiten Monomer polymerisiert wird, um ein Polymer mit Modifizierungseinheiten zu erhalten, das zusammen mit einem Lösungsmittel und gegebenenfalls Additiven zu einem Elektroisolierlack formuliert wird.

In einer besonders bevorzugten Ausführungsform wird der erfindungsgemäße Elektroisolierlack dadurch hergestellt, dass ein Diisocyanat mit einem Polysiloxan mit reaktionsfähigen Gruppen, z.B. OH, COOH oder NH₂, umgesetzt wird und das Reaktionsprodukt, z.B. ein Präpolymer, anschließend mit einem Säureanhydrid polymerisiert wird.

Die hergestellten Polymere, die als kolloidale Lösungen oder Dispersionen vorliegen, werden zu applikationsfähigen Elektroisolierlacken komplettiert. Die Polymere können mit geeigneten Lösungsmitteln auf die gewünschte Viskosität verdünnt werden. Vorzugsweise weisen die applikationsfähigen Lacke eine Viskosität von 10 bis 2500 mPa*s auf, bevorzugt von 100 bis 800 mPa*s und besonders bevorzugt von 200 bis 500 mPa*s.

Geeignete Lösungsmittel für die Herstellung von Elektroisolierlacken sind beispielsweise Kresole und Xylenole, die gegebenenfalls einen Anteil an Phenol enthalten, Glykolether, beispielsweise ein Oligoglykolen-Ether, wie beispielsweise Methyldiglykol, Glykoletherester, wie beispielsweise Butyldiglykolacetat, Propylencarbonat, höhere Alkohole, wie beispielsweise Benzylalkohol und Diacetonalkohol, und höhere Ketone, wie beispielsweise Isophoron. Zur Steuerung der Viskosität, zum Beispiel im Hinblick auf den Applikationsfestkörper, können Verdünnungsmittel verwendet werden, wie z.B. aromatische Kohlenwasserstoffe wie Xylole und C₃-C₅-Aromaten, die auch Alkylnaphthaline enthalten können. Als Beispiel sind hier Solvesso®100, Solvesso®150, Solvesso®200, Handelsprodukte der Exxon, genannt.

Sofern Polyisocyanate für die Herstellung der funktionalisierten Polymere verwendet werden, werden bevorzugt polare Lösungsmittel ohne reaktive Wasserstoffe eingesetzt, wie beispielsweise N-Methylpyrrolidon, N-Ethylpyrrolidon oder N,N-Dimethylacetamid. Diese sogenannten Prozesslösungsmittel stellen einen Bestandteil des Elektroisolierlacks dar.

Ferner werden gegebenenfalls Additive wie etwa Katalysatoren und Vernetzungspartner zugesetzt. Gemäß der vorliegenden Erfindung handelt es sich bei den Katalysatoren beispielsweise um Umesterungskatalysatoren, wie beispielsweise Tetrabutyltitanat, oder Umurethanisierungskatalysatoren, wie beispielsweise organische Zinnsalze. Als Vernetzungspartner können zum Beispiel, sofern Polyester als Polymere verwendet werden, für die Urethanvernetzung erforderliche Mengen an verkappten Polyisocyanat, z.B. Isomerengemische und Derivate des Diisocyanatodiphenylmethan, verkappt mit Kresolen, zugesetzt werden. Weitere Additive können z.B. Entschäumer und Verlaufsadditive sein.

In einem weiteren Aspekt betrifft die vorliegende Erfindung ein Verfahren zur Herstellung eines beschichteten Drahtes, dadurch gekennzeichnet, dass ein erster modifizierter Baustein, z.B. ein Monomer oder ein Präpolymer, mit mindestens einer Modifizierungseinheit mit mindestens einem zweiten Monomer polymerisiert wird, um ein Polymer mit Modifizierungseinheiten zu erhalten, das zusammen mit einem Lösungsmittel und gegebenenfalls Additiven zu einem Elektroisolierlack formuliert wird und der Elektroisolierlack auf einen Draht aufgebracht wird und einem Einbrennprozess unterzogen wird, wobei an der Oberfläche des ausgehärteten Elektroisolierlacks separate Bereiche vorliegen.

Während des Einbrennprozesses findet der Filmbildungsprozess des Elektroisolierlacks statt. Dabei verdunsten die Lösungsmittel und gegebenenfalls laufen Vernetzungsreaktionen ab. Zum anderen findet während des Einbrennprozesses eine Phasentrennung des Polymers und den damit unverträglichen Modifizierungseinheiten statt. Dadurch orientieren sich die Modifizierungseinheiten an der Oberfläche des Elektroisolierlacks, wodurch eine verbesserte Gleitfähigkeit erreicht wird. Die Phasentrennung führt zu einer inhomogenen Oberfläche des Elektroisolierlacks, welches durch eine veränderte Oberflächenstruktur gegenüber Elektroisolierlack ohne Modifizierungseinheiten deutlich wird. Es wird zur Zeit angenommen, dass die Inkompatibilität des Polymers mit den Modifizierungseinheiten auf die Neigung des Polymeranteils, polare Wechselwirkungen auszubilden und die Neigung der Modifizierungseinheiten zu unpolaren Wechselwirkungen zurückzuführen ist.

Der erfindungsgemäße Elektroisolierlack wird bevorzugt zum Auftragen auf einen Draht, insbesondere auf einen Kupferdraht, verwendet. Vorzugsweise stellt der Draht einen elektrischen Leiter dar. Ein elektrischer Leiter gemäß der vorliegenden Erfindung ist ein Medium, welches frei bewegliche Ladungsträger besitzt und daher zum Transport von elektrischem Strom fähig ist. Bevorzugte elektrische Leiter gemäß der vorliegenden Erfindung sind Metalle oder Metalllegierungen, insbesondere Kupfer und Aluminium.

Drähte werden gewöhnlich im Mehrschichtverfahren mit unterschiedlichen Lackmaterialien beschichtet. In einer bevorzugten Ausführungsform wird der erfindungsgemäße Elektroisolierlack daher als äußere Schicht auf einen Draht, der bereits mit einem Elektroisolierlack ohne Modifizierungseinheiten beschichtet ist, aufgebracht. Der Draht, auf dem der erfindungsgemäße Elektroisolierlack als äußere Schicht aufgebracht wird, kann als untere Schichten einen oder mehrere Elektroisolierlacke ohne Modifizierungseinheiten enthalten.

Bevorzugt wird der erfindungsgemäß hergestellte Elektroisolierlack mit üblichen Lackiermaschinen, die eine horizontale und vertikale Anordnung aufweisen können, auf Drähte, bevorzugt Kupferdrähte, aufgetragen. Die Drähte können Durchmesser von 0,01 bis 10 mm, bevorzugt 0,01 bis 3,0 mm, aufweisen und es kann sich um Flach- oder Profildrähte handeln. Der Elektroisolierlack wird in 2 bis 40 Tauchungen, bevorzugt 4 bis 30, stärker bevorzugt in 8 bis 25 Tauchungen z.B. über Filz- oder Düsenabstreicher aufgebracht. Anschließend erfolgt ein Aushärten. Dabei wird der Elektroisolierlack vorzugsweise im Umluftofen mit Umlufttemperaturen von 400 °C bis 700 °C, bevorzugt 450 °C bis 600 °C, stärker bevorzugt 525 °C bis 625 °C, eingebrannt. In einer bevorzugten Ausführungsform ist der Lackierungsprozess kontinuierlich und die Lackdrähte werden mit Abzugsgeschwindigkeiten von 20 bis 250 m/min gefahren, bevorzugt 60 bis 200 m/min, stärker bevorzugt 80 bis 140 m/min.

Ein weiterer Gegenstand der Erfindung ist ein Draht, insbesondere ein Kupferdraht, der mit einem erfindungsgemäßen Elektroisolierlack beschichtet ist. Ein weiterer bevorzugter Gegenstand der Erfindung ist ein Draht, insbesondere ein Kupferdraht, der einen Elektroisolierlack ohne Modifizierungseinheiten und als äußere Schicht oder Schichten einen erfindungsgemäßen Elektroisolierlack aufweist.

Die erfindungsgemäßen Drähte mit Elektroisolierlack können für verschiedene Zwecke verwendet werden, bevorzugt für die Herstellung von Spulen und Wicklungen auf Rotorankern und Statoren für Elektromotoren und Generatoren und für verwandte elektrische Bauteile.

Eine bevorzugte Ausführungsform der Erfindung ist eine Spule, die einen Draht, insbesondere einen Kupferdraht aufweist, der mit einem erfindungsgemäßen Elektroisolierlack beschichtet ist oder der einen Elektroisolierlack ohne Modifizierungseinheiten und als äußere Schicht oder Schichten einen erfindungsgemäßen Elektroisolierlack aufweist.

Obwohl der erfindungsgemäß beschichtete Draht bereits sehr gute Gleitfähigkeit aufweist, kann als äußere Schicht zusätzlich ein externes Gleitmittel aufgetragen werden.

Die Erfindung betrifft weiterhin die Verwendung eines Polymers, umfassend ein Basispolymer und Modifizierungseinheiten, die nach Aushärtung des Polymers mit dem Basispolymer unverträglich sind, als Elektroisolierlack. Bei dem Basispolymer und den Modifizierungseinheiten handelt es sich insbesondere um die hierin zuvor aufgeführten und bevorzugt um die hierin zuvor hervorgehobenen Materialien.

In einer weiteren Ausführungsform der Erfindung liegen die Polymere in Form von Gelpartikeln in dem Elektroisolierlack vor. Diese Gelpartikel enthalten Modifizierungseinheiten, nämlich Polydialkylsiloxane mit 40 bis 500 Si-Einheiten und insbesondere langkettige Polydimethylsiloxane, an ihrer Oberfläche. Die Modifizierungseinheiten können nach außen abstehen (Polymer-Brush-Struktur). Bei Kontakt einer Oberfläche, die eine solche Gelpartikelbeschichtung enthält, mit einer Gegenfläche, z.B. einer metallischen oder nichtmetallischen Oberfläche, wie etwa einer Stahloberfläche oder einer Wickelrolle eines Drahtwicklers, werden die Gelpartikel vom Lackträger, d.h. dem Draht, abgestriffen und sind so auf beiden Reibepartnern verfügbar. Dies führt zu einer nochmaligen Reduzierung des Reibungswiderstands und somit zu einer weiteren_Verbesserung der Gleitfähigkeit.

Die Erfindung betrifft weiterhin die Verwendung von Polydialkylsiloxan-Gelpartikeln in Elektroisolierlacken sowie Elektroisolierlacke umfassend Polydialkylsiloxan-Gelpartikel. Als Polydialkylsiloxane werden dabei die hierin zuvor beschriebenen langkettigen Polydialkylsiloxane und insbesondere Polydimethylsiloxane eingesetzt. Es wurde festgestellt, dass durch solche Polydialkylsiloxane (PDAS)-Gelpartikel und insbesondere durch Polydimethylsiloxan (PDMS)-Gelpartikel eine weitere Verbesserung der Gleiteigenschaften erzielt werden kann. Erfindungsgemäß werden solche Gelpartikel in einen Elektroisolierlack eingebracht. Die PDAS- und insbesondere PDMS-Gelpartikel können dabei in einen herkömmlichen Isolierlack, aber auch in einen wie hierin beschriebenen modifizierten Isolierlack eingebracht werden.

Die erfindungsgemäße Aufgabe wird auch gelöst durch einen Elektroisolierlack, umfassend ein Polymer und Polydialkylsiloxan-Gelpartikel, worin das Polymer aus der Gruppe bestehend aus Polyamidimiden, Polyesterimiden, Polyurethanen, Polyestern, Polyamiden, Polyimiden, Polyesteramidimiden, Mischungen oder Kombinationen davon ausgewählt ist, wobei die Polydialkylsiloxane 40 bis 500 Si-Einheiten aufweise. Bei dieser Ausführungsform werden die vorteilhaften Eigenschaften eines Basispolymers, z.B. chemische Stabilität oder/und Härte, mit den vorteilhaften Eigenschaften der Modifizierungseinheiten, z.B. Haftverminderung oder/und Reibungsverminderung dadurch kombiniert erzielt, dass eine Abgabe der in den Gelpartikeln enthaltenen Modifizierungseinheiten an die Umgebung und insbesondere ein Ausbluten durch die Zugabe der Modifizierungseinheiten als Gelpartikel verhindert oder zumindest verringert wird.

Die in den Polysiloxan-Gelpartikeln als Modifizierungseinheiten enthaltenen Polysiloxane sind nach Aushärtung des Polymers mit dem Polymer unverträglich. Sie bilden deshalb nach Aushärtung des Polymers an der Oberfläche des ausgehärteten Elektroisolierlackes separate Bereiche. Gleichzeitig wird ein unmittelbares Austreten der Modifizierungseinheiten verhindert, da die Polysiloxan-Gelpartikel relativ stabil in den ausgehärteten Elektroisolierlack eingebunden sind.

Bei den zugesetzten Polysiloxan-Gelpartikeln handelt es sich um Polydialkylsiloxan-Gelpartikel, wobei die Alkylseitenketten vorzugsweise eine Länge von 1 bis 6 Kohlenstoffatomen aufweisen, und besonders bevorzugt um Polydimethylsiloxan-Gelpartikel. Bei den Gelpartikeln handelt es sich insbesondere um vernetzte Gelpartikel.

Als Polymer für den Elektroisolierlack werden die hierin zuvor beschriebenen Basispolymere eingesetzt, nämlich Polyamidimide, Polyesterimide, Polyurethane, Polyester, Polyamide, Polyimide, Polyesteramidimide, Mischungen oder Kombinationen davon. Besonders bevorzugt sind Polyamidimide und Polyesterimide und am meisten bevorzugt Polyamidimide. Die Polymere können je nach Anwendung des Lackes ausgewählt werden. Bei Verwendung als Elektroisolierdraht finden insbesondere Polyamidimide oder/und Polyesterimide Verwendung.

Die Erfindung betrifft weiterhin einen ausgehärteten Elektroisolierlack, der durch thermisches Aushärten eines Lackes umfassend ein Polymer und Polysiloxan-Gelpartikel erhalten wird. Das thermische Aushärten findet vorzugsweise bei Temperaturen von 400 °C bis 700 °C, bevorzugt von 450 °C bis 600 °C und noch stärker bevorzugt von 525 °C bis 625 °C statt.

Die vorliegende Erfindung betrifft weiterhin ein Verfahren zur Herstellung eines Elektroisolierlackes, bei dem eine Polysiloxan-Gelpartikel-Dispersion einem ein Polymer enthaltenden Lack zugemischt wird. Bei dem ein Polymer enthaltenden Lack kann es sich um einen herkömmlichen Lack handeln oder um einen wie hierin zuvor beschriebenen modifizierten Lack.

Die Gelpartikel können insbesondere als reibungsreduzierende Komponente in polymere Beschichtungen und Bulkmaterialien, insbesondere in Lacke eingemischt werden. Insbesondere in Lacken auf Basis der hierin beschriebenen Polymeren und besonders bevorzugt in Elektroisolierlacken, beispielsweise auf Basis von Polyamidimid oder Polyesterimid, zeigt sich eine starke Reduktion des Reibungswiderstandes. Diese Beschichtungen weisen außerdem eine sehr niedrige Haftung auf.

Es wurde festgestellt, dass durch die erfindungsgemäßen Siloxan-Gelpartikel eine deutliche Reduktion des Reibungswiderstandes in Beschichtungen, insbesondere in Polyamidimid-basierten Beschichtungen, erreicht wird. Polysiloxan-Gelpartikel bieten den Vorteil einer "Additiv-Lösung", d.h. sie können auf einfache Weise herkömmlichen Beschichtungssystemen oder Lacken zugemischt werden.

Es wurde weiterhin festgestellt, dass während des Reibungsprozesses ein Übertrag von Gelpartikeln aus der Beschichtung auf den Gegenstand stattfinden kann und damit eine weitere Reibungsreduktion, z.B. gegenüber Stahl, erhalten wird.

Polysiloxan-Gelpartikel können hingegen aufgrund ihrer Vernetzung nicht migrieren und weisen eine höhere Temperaturstabilität auf als Polydimethylsiloxan-Polyether-Blockcopolymere.

In einer bevorzugten Ausführungsform wird eine erfindungsgemäße Polysiloxan-Gelpartikel-Dispersion durch Vernetzen von Vinylgruppenfunktionalisierten Polysiloxanen mit Hydridgruppen-funktionalisierten Polysiloxanen in einem Dispergiermittel hergestellt. Dispersionen können in einen Elektroisolierlack eingearbeitet werden, um dadurch einen Lack mit niedriger Reibung bereitzustellen. Es besteht aber auch die Möglichkeit, die Geltpartikeldispersion bereits bei der Herstellung eines Lackes einzuarbeiten. Die vernetzten Gelpartikel orientieren sich an die Oberfläche der Lackschicht und führen zu einer nachhaltigen Verbesserung der Gleitfähigkeit der mit einem solchen Lack beschichteten Oberfläche.

Hierin beschrieben werden weiterhin Polysiloxan-Gelpartikel-Dispersionen sowie Herstellungsverfahren für solche Dispersionen.

Erfindungsgemäß handelt es sich um Polydialkylsiloxan-Gelpartikel, wobei die Alkylseitenketten vorzugsweise eine Länge von 1 bis 6 Kohlenstoffatomen aufweisen, und am meisten bevorzugt um Polydimethylsiloxan-Gelpartikel.

Die Gelpartikel werden vorzugsweise als Dispersion der Gelpartikel in einem Dispergiermittel hergestellt. Die Synthese von Gelpartikeln zur Bildung einer Gelpartikeldispersion erfolgt vorzugsweise in polaren Medien. Vorzugsweise sind die Präpolymere oder Monomere der Gelpartikel in den Dispersionsmedien nicht oder nur gering löslich. Vorzugsweise werden als Matrix- oder Dispergiermittel für die Dispersion NMP (N-methyl-2-pyrrolidon), NEP (N-Ethylpyrrolidon), DMAP (Dimethylpyrrolidon), DMAc (Dimethylacetamid), DMF (Dimethylformamid), Wasser oder wässrige Lösungen oder/und DMSO (Dimethylsulfoxid) verwendet. Besonders bevorzugt ist eine Dispersion in N-Methyl-2-pyrrolidon.

Eine solche Dispersion von PDAS-Gelpartikeln, bevorzugt von PDMS-Gelpartikeln, kann als Komponente in Beschichtungssysteme eingemischt werden und dadurch als reibungsreduzierende Komponente wirken. Die Emulsion kann durch funktionelle Monomere selbst stabilisiert sein und/oder durch einen Emulgator stabilisiert werden.

Die erfindungsgemäßen Gelpartikel können auf verschiedene Weise hergestellt werden. Bevorzugt ist die Herstellung einer Dispersion aus vernetzten Polydialkylsiloxan-Gelpartikeln und bevorzugt aus vernetzten Polydimethylsiloxan-Gelpartikeln mittels in situ-Synthese. Die Gelpartikel können aber auch mittels Additionshärtung (Hydrosilylierung) oder mittels Emulsionspolymerisation hergestellt werden. Die Herstellung kann dabei in wässriger oder in nicht wässriger Matrix erfolgen.

Als Ausgangsmaterial werden vorzugsweise Vinyl-funktionelle Siloxan-Präpolymere in Kombination mit Hydrid-funktionelle Siloxan-Präpolymeren eingesetzt. Die reaktiven Gruppen reagieren über Hydrosilylierung miteinander und bilden vernetzte Polysiloxan-Gelpartikel. Die Vernetzung kann durch einen geeigneten Katalysator unterstützt werden. Es besteht auch die Möglichkeit, nur Vinyl-funktionelle Polysiloxane zu verwenden und eine radikalische Vernetzung, beispielsweise mittels eines Peroxidinitiators, durchzuführen.

Besonders bevorzugt sind Dispersionen, umfassend PDMS-Gelpartikel in NMP (N-Methyl-2-pyrrolidon).

In einer bevorzugten Ausführungsform bestehen die erfindungsgemäßen Gelpartikel ausschließlich aus Polysiloxanen, insbesondere Polydimethylsiloxanen, die miteinander über reaktive Gruppen, wie beispielsweise Vinylgruppen oder Hydridgruppen, verknüpft sind. Es ist aber auch möglich, Gelpartikel bereitzustellen, die einen Kern, insbesondere einen SiO₂- oder einen Polymerkern enthalten.

Die erfindungsgemäßen Gelpartikel können zusätzlich zu Modifizierungseinheiten enthaltenden Polymeren eingesetzt werden, um beispielsweise eine Reibungsverminderung zu erzielen. Es besteht aber auch die Möglichkeit, Polysiloxan-Gele anstelle von modifizierten Polymeren einzusetzen, d.h. in herkömmliche Lacke oder Beschichtungsmaterialien einzubringen.

Im Folgenden werden einige besonders bevorzugte Ausgangsstoffe für Polysiloxan-Gelpartikel beschrieben:
Vinyl-terminierte Polydimethylsiloxane 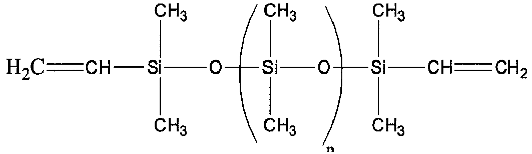
worin n eine ganze Zahl von 40 bis 500 darstellt.

Vinylmethylsiloxan-dimethylsiloxan-Copolymere, Trimethylsiloxy-terminiert

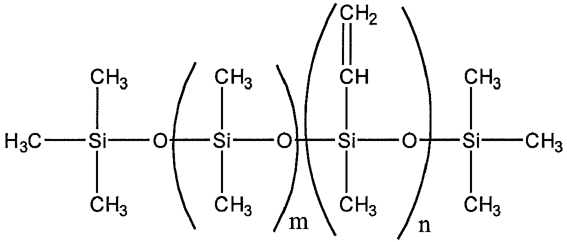

In der Formel können die Dimethylsiloxan- und Vinylmethylsiloxan-Gruppen in beliebiger Reihenfolge auftreten. n bezeichnet dabei den Mol-%-Gehalt an Vinylmethylsiloxan und liegt zwischen 0,5 und 1,5, bevorzugt zwischen 0,8 und 1,2. m gibt den Mol-%-Anteil an Dimethylsiloxan an und berechnet sich als m = 100 - n.

Vinylmethylsiloxan-dimethylsiloxan-Copolymere, Trimethylsiloxy-terminiert werden anhand ihrer Viskositäten charakterisiert. Erfindungsgemäß sind Viskositäten von 250 cSt bis 500.000 cSt verwendbar, insbesondere Viskositäten von 1.000 cSt bis 100.000 cSt.

### Vinyl-funktionelle Makromere

Solche Makromere dienen als "Dendling Ends" und/oder zur Erzeugung von Polymer-Brush-Oberflächen. Geeignete Vinyl-funktionale Makormere sind beispielsweise asymmetrische Monovinyl-terminierte Polydimethylsiloxane, insbesondere Verbindungen mit der Formel 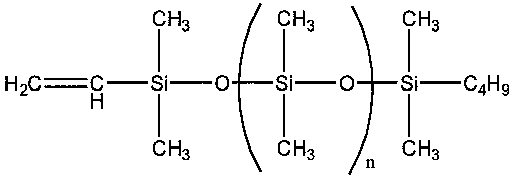 worin n eine ganze Zahl von 40 bis 500 annehmen kann.

Als Hydrid-funktionelle Siloxan-Präpolymere können bevorzugt die folgenden Strkuturen eingesetzt werden:
Trimethylsiloxy-terminierte Methylhydrosiloxan-Dimethylsiloxan-Copolymere, insbesondere mit der allgemeinen Formel

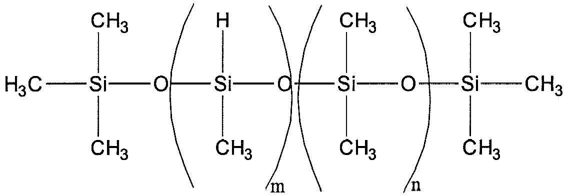

Die Anordnung der Methylhydrosiloxan- und Dimethylsiloxan-Gruppierungen in den Copolymeren ist beliebig. m gibt jeweils den Anteil an Methylhydrosiloxan und n den Anteil an Dimethylsiloxan-Einheiten an. Terminierte Trimethylsiloxy-Methylhydrosiloxan-Dimethylsiloxan-Copolymere mit einer Molmasse von 900 g/Mol bis zu einer Molmasse von 50.000 g/Mol können zur Herstellung der erfindungsgemäßen Gelpartikel eingesetzt werden.

Hydrid-terminierte Methylhydrosiloxan-Dimethylsiloxan-Copolymere, insbesondere mit der Formel

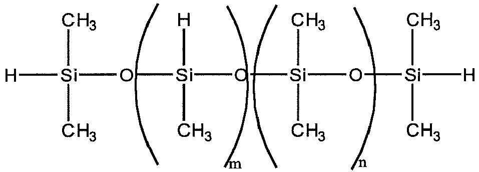

Dimethylhydrosiloxan- und die Dimethylsiloxan-Einheiten können dabei beliebig angeordnet sein. m gibt den Anteil an Methylhydrosiloxan-Einheiten an und n den Anteil an Dimethylsiloxan. m, also der Mol-%-Anteil an Methylhydrosiloxan beträgt vorzugsweise 5 bis 20, mehr bevorzugt 7 bis 8. n, also der Mol-%-Anteil an Dimethylsiloxan beträgt vorzugsweise 90 bis 95, mehr bevorzugt 92 bis 93. Bevorzugt beträgt m, also der Mol-%-Anteil an Methylhydrosiloxan-Einheiten, 10 bis 90, mehr bevorzugt 20 bis 40 und noch mehr bevorzugt 25 bis 30. n, also der Mol-%-Anteil an Dimethylsiloxan beträgt vorzugsweise 50 bis 90, mehr bevorzugt 60 bis 80 und am meisten bevorzugt 70 bis 75. Das Molekulargewicht der verwendeten Hydridterminierten Methylhydrosiloxan-Dimethylsiloxan-Copolymere beträgt vorzugsweise 2.000 bis 2.600 g/Mol.

Hydrid-terminierte Polydimethylsiloxane, insbesondere der Formel 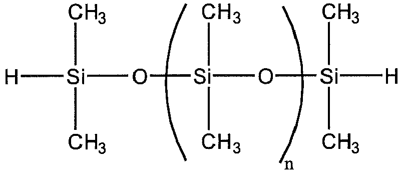 worin n eine ganze Zahl von 40 bis 300, insbesondere von 40 bis 230 darstellt.

Vernetzte Siloxan-Gelpartikel, insbesondere Dispersionen vernetzter PDMS-Gelpartikel können vorteilhafterweise in Lack- oder Beschichtungssysteme eingearbeitet werden. Bevorzugt werden die hierin bevorzugten PDMS-Gelpartikel-Dispersionen in NMP in konventionelle NMP-basierte Polyamidimidlacke, insbesondere Elektroisolierlacke, eingearbeitet. Die Einarbeitung kann z.B. mittels Dispermaten oder Ultra-Turaxx erfolgen. Es ist auch möglich, die Gelpartikel in modifizierte Lacke, insbesondere in modifizierte Polyamidimid-Elektroisolierlacke einzuarbeiten. Die Gele, insbesondere in Form einer Gelpartikeldispersion, können auch in andere Lacke und insbesondere in andere Elektroisolierlacke eingearbeitet werden, z.B. in Polyesterimidelektroisolierlacke, Polyesterelektroisolierlacke, Polyimidelektroisolierlacke, Polyamidelektroisolierlacke/backlacke oder/und Polyurethanelektroisolierlacke/backlacke.

In einer weiteren bevorzugten Ausführungsform handelt es sich bei den Gelpartikeln um Gelpartikel mit einem harten Silikakern, insbesondere um PDMS-Brushpartikel mit hartem Silikakern. Als Ausgangspartikel werden dabei Silikatpartikel eingesetzt. Solche Partikel bestehen vorzugsweise aus pyrogener Kieselsäure. Vorzugsweise werden Siliciumdioxidpartikel eingesetzt, deren Oberflächen Hydroxyl- oder/und Vinylgruppen aufweisen. An die Hydroxyl- oder/und Vinylgruppen der Siliciumdioxidpartikel werden dann Siloxane angehängt. Dies kann durch Zugabe eines Hydridfunktionellen Siloxans, gegebenenfalls in Gegenwart eines Katalysators, z.B. eines Platinkatalysators, erfolgen. Die Verknüpfung erfolgt über eine Hydrosilylierungsreaktion. Das eingesetzte Hydrid-funktionelle Siloxan kann eine oder mehrere Si-H-Funktionen aufweisen. Auch die Molmasse kann variiert werden und beträgt vorzugsweise zwischen 200 und 100.000, mehr bevorzugt zwischen 500 und 5.000 g/Mol.

Alternativ kann ein Hydrid-funktionalisiertes Siloxan mit einem Vinylfunktionellen Silazan umgesetzt werden. Im Anschluss daran kann das Vinyl- bzw. Silazan-terminierte Siloxan mit Hydroxylgruppen von Silikatpartikeln reagieren. Alternativ können auch Chlordialkylvinylsilane, insbesondere Chlordimethylvinylsilane verwendet werden.

Die Erfindung wird nachfolgend anhand bevorzugter Ausführungsbeispiele und Figuren, die den Schutzbereich der Erfindung jedoch nicht einschränken sollen, erläutert.

### Figuren

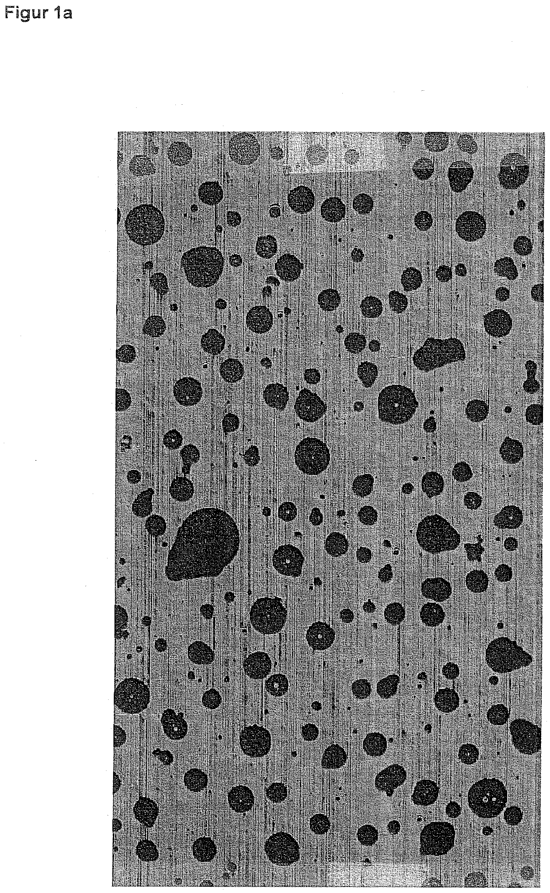

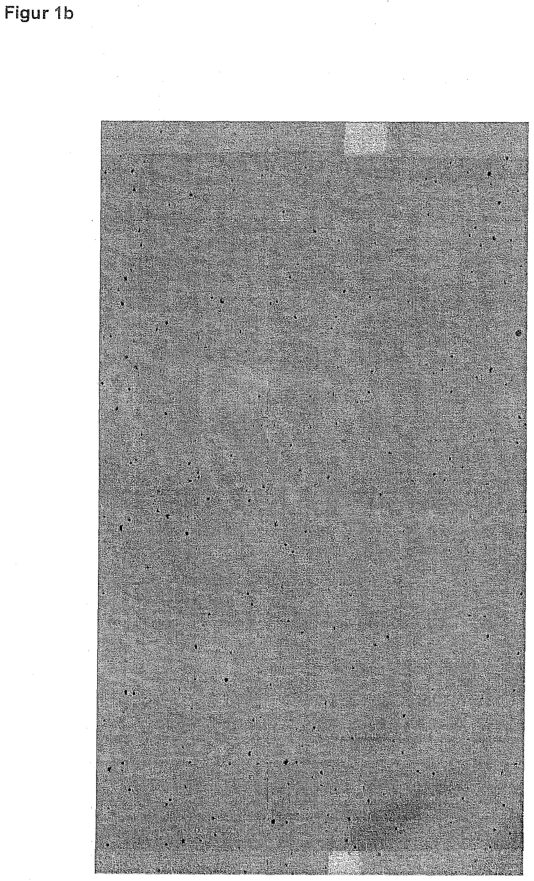

Die Phasentrennung der Polymere und den Modifizierungseinheiten wird anhand der Figuren 1 a und 1 b deutlich.
**Figur 1a** zeigt eine Rasterkraftmikroskopaufnahme der Oberfläche des erfindungsgemäßen Elektroisolierlacks auf Basis eines Polyamidimidpolydimethylsiloxan-Blockcopolymers, wobei die Polydimethylsiloxane ca. 63 Si-Einheiten aufweisen. Der Elektroisolierlack ist auf einem Metallplättchen aufgetragen.
   Eine deutliche Phasentrennung zwischen den Modifizierungseinheiten, die als dunkle Blasen zu erkennen sind, und dem Polymer ist auf der Oberfläche des Elektroisolierlacks zu erkennen.
**Figur 1b** zeigt eine Rasterkraftmikroskopaufnahme der Oberfläche eines Elektroisolierlacks auf Basis eines Polyamidimid-polydimethylsiloxan-Blockcopolymers, wobei die Polydimethylsiloxane ca. 10 Si-Einheiten aufweist. Der Elektroisolierlack ist auf einem Metallplättchen aufgetragen.
   Ein deutliche Phasentrennung zwischen dem Polymer und den Modifizierungseinheiten ist nicht sichtbar.
   Der Vergleich zwischen der Figur 1a, wobei ein Polydimethylsiloxan mit einer Kettenlänge von 63 Si-Einheiten und der Figur 1b, wobei ein Polydimethylsiloxan mit einer deutlich kürzeren Kettenlänge von 10 Si-Einheiten verwendet wurde, zeigt deutlich, dass eine Phasentrennung nur für ein Polymer mit Modifizierungseinheiten gemäß der vorliegenden Erfindung auftritt.
**Figuren 2a****-g** zeigen für den erfindungsgemäßen Elektroisolierlack geeignete Polydimethylsiloxane.
**Figuren 3a****-d** zeigen verschiedene Ausführungsformen für die erfindungsgemäßen Polymere.

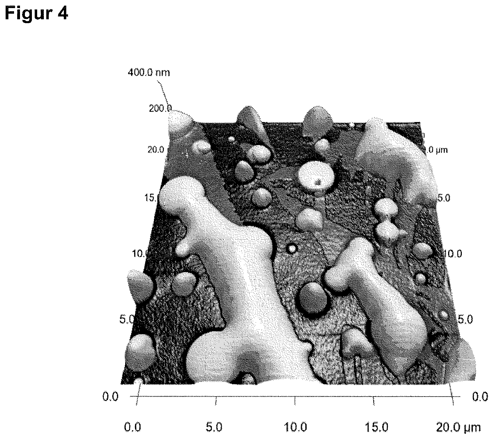

**Figur 4** zeigt eine Rasterkraftmikroskopie in D3-Aufnahme der Oberfläche einer Beschichtung eines funktionell mit einem Polydimethylsiloxan modifizierten Polyamidimid. Die hell dargestellten Bereiche sind mobile, aber fixierte Siloxan-Segmente.

### Beispiele

### Beispiel 1

### Herstellung eines Polyamidimids mit einem 20 %-igen Anteil an α-(2,2-Dimethylolbutoxy)-propyl-ω-n-butylpolydimethylsiloxanfunktionalisiertem Polymer

In einen Laborreaktor aus Glas mit 2 I Gesamtvolumen, ausgestattet mit einer elektrischen Widerstandheizung mit Temperaturkontrolle und -steuerung, mit einem Rührer und einem Rückflusskühler und der Einleitung von Schutzgas (Stickstoff), werden 300,0 g N-Methylpyrrolidon (NMP) und 250,0 g Xylol - als Prozesslösungsmittel - und 293,5 g 4,4'-Diisocyanatodiphenylmethan (MDI) eingewogen und die Reaktionsmischung wird leicht erwärmt. Das MDI wird bei 45 °C im vorgelegten Lösungsmittel gelöst. Dann werden 104,0 g des α-(2,2-Dimethylolbutoxy)-propyl-ω-n-butylpolydimethylsiloxan, das ca. 63 Si-Einheiten aufweist, über einen Zeitraum von 15 Minuten zudosiert, die Temperatur wird dabei bei 45 °C gehalten. Dann wird das Reaktionsgut auf 70 °C erwärmt und es wird eine Stunde bei 70 °C gerührt. Dann wird auf 45 °C abgekühlt und es werden 218,0 g Trimellithsäureanhydrid (TMA) zugegeben. Dann wird eine Stunde bei 45 bis 50 °C gerührt. Danach wird die Temperatur unter Rühren in Stufen gesteigert: 30 Minuten bei 65 °C, dann 30 Minuten bei 75 °C, dann 60 Minuten bei 85 °C, dann 60 Minuten bei 100 °C, und schließlich 60 Minuten bei 130 bis 140 °C. Dabei spaltet sich das Reaktionsprodukt Kohlensäure aus Carboxylgruppen und Isocyanat ab. Das Reaktionsgut erreicht eine Viskosität (gemessen an einer Probe im Platte-Kegel-Viskosimeter bei 30 °C) von 6 Pa·s. Es wird auf unter 60 °C gekühlt und 6,1 g Ethanol zugegeben, um die Reaktion abzufangen. Die entstandene kolloidale Lösung hat einen Festkörpergehalt von 48 % (gemessen bei 1^{h} 130 °C im Umluftofen). Der Anteil an unverträglichem Polydimethylsiloxan beträgt 20 Massen-%, bezogen auf das gesamte Polymer (Festkörper).

### Vergleichsbeispiel (VB):

### Herstellung eines Polyamidimids ohne Modifizierungseinheiten

Es wird genauso verfahren wie unter Beispiel 1 beschrieben, aber ohne die Zugabe des unverträglichen Polydimethylsiloxans. In den beschriebenen Laborreaktor werden 300,0 g NMP und 250,0 g Xylol als Prozesslösungsmittel eingewogen und es werden 293,5 g 4,4'-Diisocyanatodiphenylmethan bei 45 °C darin gelöst. Dann werden 223,1 g TMA zugegeben. Dann wird eine Stunde bei 45 bis 50 °C gerührt. Danach wird die Temperatur unter Rühren in Stufen gesteigert: 30 Minuten bei 45 °C, dann 30 Minuten bei 75 °C, dann 60 Minuten bei 85 °C, dann 60 Minuten bei 100 °C und schließlich 60 Minuten bei 130 bis 140 °C. Dabei spaltet sich das Reaktionsprodukt Kohlensäure aus Carboxylgruppen und Isocyanat ab. Das Reaktionsgut erreicht eine Viskosität (gemessen an einer Probe im Platte-Kegel-Viskosimeter bei 30 °C) von 6 Pa·s. Es wird auf unter 60 °C gekühlt. Die entstandene kolloidale Lösung hat einen Festkörpergehalt von 42,9 % (gemessen bei 1^{h} 130 °C im Umluftofen).

### Beispiel 2

### Herstellung eines Polyamidimids mit 20 %-igem Anteil an α-(2,2-Dimethylolbutoxy)-propyl-ω-n-Butylpolydimethylsiloxanfunktionalisiertem Polymer

Es wird genauso verfahren wie unter Beispiel 1 beschrieben. Die Einwaagemengen sind in Tabelle 1 aufgeführt.

### Beispiel 3

### Herstellung eines Polyamidimids mit 5 %-igem Anteil an α-(2,2-Dimethylolbutoxy)-propyl-ω-n-Butylpolydimethylsiloxanfunktionalisiertem Polymer

Es wird genauso verfahren wie unter Beispiel 1 beschrieben. Die Einwaagemengen sind in Tabelle 1 aufgeführt.

### Beispiel 4

### Herstellung eines Polyamidimids mit 20 %-igem Anteil an Aminopropylpolydimethylsiloxan-funktionalisiertem Polymer

In die unter Beispiel 1 beschriebene Apparatur werden 547,6 g NMP und 228,0 g TMA eingewogen. Das TMA wird unter Rühren bei 70 °C gelöst. Dann werden 102,5 g eines Aminopropylpolydimethylsiloxans, das ca. 65 Si-Einheiten aufweist, innerhalb von 15 Minuten zudosiert. Es wird auf 120 °C erwärmt und dann 1 Stunde bei 120 °C gehalten, damit das Polydimethylsiloxan abreagieren kann. Es wird dann auf 40 °C abgekühlt und dann werden innerhalb einer Stunde 280,0 g MDI zugegeben. Es wird innerhalb von 2 Stunden auf 85 °C erwärmt und danach auf 130 °C, bis eine Viskosität von 6 Pa·s (gemessen im Platte-Kegel-Viskosimeter bei 30 °C) erreicht wird. Dann wird die Reaktionsmischung abgekühlt. Das entstehende Produkt hat einen Festkörpergehalt von 46,9 % (gemessen bei 1^{h} 130 °C im Umluftofen).

### Beispiel 5

### Herstellung eines Polyamidimids mit 20 %-igem Anteil an 2-Hydroxyethoxypropylpolydimethylsiloxan-funktionalisiertem Polymer (das Polydimethylsiloxan weist ca. 132 Si-Einheiten auf)

Es wird genauso verfahren, wie unter Beispiel 1 beschrieben. Die Einwaagemengen sind in der Tabelle 1 aufgeführt.

**Tabelle 1**

| **Beispiele für Polyamidimide mit Modifizierungseinheiten und Vergleichsbeispiel** | | | | | | |
|---|---|---|---|---|---|---|
| **Bestandteile [g]** | **B1** | **B2** | **B3** | **B4** | **B5** | **VB** |
| N-Methylpyrrolidon (NMP) | 300,0 | 300,0 | 300,0 | 547,6 | 300,0 | 300,0 |
| Xylol | 250,0 | 250,0 | 250,0 | - | 250,0 | 250,0 |
| 4,4'-Diisocyanatodiphenylmethan (MDI) | 293,5 | 293,5 | 293,5 | 270,0 | 293,5 | 146,8 |
| Trimellithsäureanhydrid (TMA) | 218,0 | 218,0 | 218,0 | 228,0 | 224,0 | 111,6 |
| α-(2,2-Dimethylolbutoxy)-propyl-w-n-butylpolydimethylsiloxan | 104,0 | 46,0 | 22,0 | -- | -- | -- |
| Aminopropylpolydimethylsiloxan | -- | -- | -- | 102,1 | -- | -- |
| 2-Hydroxyethoxypropylpolydimethylsiloxan | -- | -- | -- | -- | 105,0 | -- |
| NMP | -- | -- | -- | 33,1 | -- | -- |
| Ethanol | 6,1 | 6,1 | 6,1 | 6,1 | 6,1 | -- |
| Abgespaltenes CO₂ | 101,4 | 102,4 | 102,85 | 93,7 | 102,8 | 103,2 |
| Summe | 1070,2 | 1011,2 | 986,7 | 1093,6 | 1075,2 | 963,4 |
| Festkörper [%] (1 h 130 °C) | 48,6 | 45,6 | 44,3 | 46,9 | 48,3 | 42,9 |
| Anteil an Polymer mit Modifizierungseinheiten [%] | 20 | 10 | 5 | 20 | 20 | -- |

### Beispiele 6-11

### Elektroisolierlacke

Aus den in den Beispielen 1-5 und in dem Vergleichsbeispiel beschriebenen Polymerlösungen wurden durch Zugabe von Lösungsmitteln Elektroisolierlacke hergestellt. Die Zusammensetzung der Elektroisolierlacke ist in Tabelle 2 dargestellt.

**Tabelle 2**

| **Elektroisolierlacke** | | | | | | | |
|---|---|---|---|---|---|---|---|
| **Bestandteil [g]** | **Anzahl Si-Einheiten in der Polydimethylsiloxankette** | **B6** | **B7** | **B8** | **B9** | **B10** | **B11** |
| Polymer Bspl. 1 (20 % Modifikation) | ca. 63 | 488,8 | -- | -- | -- | 244,4 | -- |
| Polymer Bspl. 2 (10 % Modifikation) | ca. 63 | -- | 502,8 | -- | -- | -- | -- |
| Polymer Bspl. 3 (5% Modifikation) | ca. 63 | -- | -- | 488,8 | -- | -- | -- |
| Polymer Bspl. 4 (20 % Modifikation) | ca. 65 | -- | -- | -- | 502,8 | -- | -- |
| Polymer Bspl. 5 (20 % Modifikation) | ca. 132 | -- | -- | -- | -- | 244,4 | -- |
| Polymer Vergleichsbeispiel | -- | -- | -- | -- | -- | -- | 502,8 |
| N-Methylpyrrolidon | | 156,2 | 119,8 | 98,5 | 617,5 | 118,4 | 82,9 |
| N,N-Dimethylacetamid | | 32,3 | 31,2 | 29,4 | 56,1 | 30,4 | 29,3 |

| **Bestandteil [g]** | **Anzahl Si-Einheiten in der Polydimethylsiloxankette** | **B6** | **B7** | **B8** | **B9** | **B10** | **B11** |
|---|---|---|---|---|---|---|---|
| Summe | | 677,4 | 653,8 | 616,7 | 1176,4 | 637,6 | 615,0 |
| Festkörper [%] (60' 130 °C) | | 35,1 | 35,1 | 35,1 | 20,0 | 35,1 | 35,1 |
| Viskosität [mPa·s] (Platte-Kegel-Viskosität) | | 710 | 860 | 780 | 350 | 660 | 830 |

### Applikationen der Elektroisolierlacke

Die in Tabelle 2 angegebenen Elektroisolierlacke wurden auf einer horizontal arbeitenden Drahtlackiermaschine mit einer Umlufttemperatur von maximal 605 °C lackiert. Der Blankdrahtdurchmesser betrug 0,53 mm, die Abzugsgeschwindigkeit 122 m/min. Der Auftrag erfolgte über Tauchungen mit Abstreifdüsen. Es gab insgesamt 10 Durchzüge. Der Auftrag der ersten 7 Durchzüge bestand aus einem handelsüblichen Polyesterimidelektroisolierlack mit einer Düsenfolge von 560/570/570/580/580/590/590 µm. Die folgenden 2 Aufträge bestanden aus einem handelsüblichen Polyamidimidelektroisolierlack mit einer Düsenfolge von 590/600 µm. Der letzte Auftrag bestand aus dem erfindungsgemäßen Isolierlack gemäß den Beispiele 6-10 bzw. aus dem Lack des Vergleichsbeispiels gemäß Beispiel 11 mit einer Düse von 610 µm Öffnungsdurchmesser.

### Prüfung der Gleitfähigkeit

Neben der Prüfung der Wärmebeständigkeit und elektrischen Eigenschaften wurde die Gleitfähigkeit nach zwei Methoden bestimmt.

### 1. Messung des Oberflächenwiderstands nach Parusell CoF

Bei der Messung des Oberflächenwiderstandes nach Parusell CoF wird ein Lackdraht zwischen einer polierten Stahlfläche und einem aufliegenden Stahlschlitten durchgeführt. Gemessen wird die Kraft, die auf den Stahlschlitten wirkt. Die Angabe erfolgt als Reibungskoeffizient (dimensionslos). Kleine Werte des Reibungskoeffizienten bedeuten geringe Reibung (Tensiometrie, siehe DIN EN 60851).

### 2. Messung des Reibungswiderstands nach Scintilla

Ein Lackdraht wird mit hoher Geschwindigkeit unter einem Stahlblock mit bestimmter Auflagefläche durchgezogen. Es wird die Kraft gemessen, die durch die Reibung erzeugt wird. Angabe in Newton (N).

Tabelle 3 zeigt die Messergebnisse an den lackierten Drähten und am Lackdraht mit dem Vergleichsbeispiel.

**Tabelle 3**

| **Messergebnisse Reibungswiderstände** | | | | | | |
|---|---|---|---|---|---|---|
| **Messmethode/Beispiel** | **B6** | **B7** | **B8** | **B9** | **B10** | **B11** |
| Anzahl Si-Einheiten | ca. 63 | ca. 63 | ca. 63 | ca. 65 | ca. 132 | - |
| Parusell CoF (DIN EN 60851) | 0,120 | 0,130 | 0,210 | 0,132 | 0,099 | 0,230 |
| Scintilla [N] | 5,50 | 6,50 | 7,00 | 5,50 | 5,50 | 14,00 |

Die in Tabelle 3 gezeigten Messergebnisse zeigen den Vorteil des erfindungsgemäßen Elektroisolierlacks (B6-B10) gegenüber einem Elektroisolierlack ohne Modifizierungseinheiten (B11). Je höher der Anteil der Modifizierungseinheiten im Polymer ist (vgl. B6 20 %, B7 10 %, B8 5%), desto geringer ist der Reibungskoeffizient und der Reibungswiderstand. Ein besonders niedriger Reibungskoeffizient wird durch das Mischen in einem Massenverhältnis von 50:50 zweier Polymere mit Modifizierungseinheiten, die eine unterschiedliche Anzahl von Si-Einheiten aufweisen, erzielt (siehe B10).

### Beispiel 12

### Herstellung eines mit Polydimethylsiloxan modifizierten Polyesterimids (PDMS)

Als Reaktionsgefäß wird ein Laborreaktor (V4A, Glas) mit indirekter Heizung (z.B. Wärmeträgeröl) oder regelbarer, elektrischer Widerstandsheizung, Produkttemperaturkontrolle, Schutzgaseinleitung, möglichst randgängigem, stufenlos regelbarem Rührer, Füllkörperkolonne mit Kopftemperaturmessung, Brücke und absteigendem Rückflusskühler (alles Destillat auffangen) eingesetzt. Die Kolonne wird als Dephlegmator gefahren.

Die Gesamtmenge an Polyolen (THEIC oder Glycerin, Ethylenglykol), Dimethylterephthalat und 0,3 % (bezogen auf die Ausbeutemenge des gesamten Polyesterimids = nfA) Butyltitanat werden in der genannten Reihenfolge eingewogen (siehe auch Rezeptur in Tabelle 4). Anschließend wird Schleppmittel zugeben: ca. 3 % auf Gesamteinwaage an Solvesso 150.

Beginn der Einleitung von Schutzgas (am besten Stickstoff, aber auch Kohlendioxid oder dessen Gemisch mit N₂ verwendbar).

Das Reaktionsgemisch wird zügig aufgeheizt auf ca. 160°C. Dann wird die Temperatur kontinuierlich über 5 Stunden auf max. 240°C gesteigert. Das Zeitmaß wird vom Destillationsprozess bestimmt, die Kolonnenkopftemperatur sollte 75°C nicht übersteigen (etwas oberhalb des Siedepunkts von Methanol, 64,7°C). Das abdestillierte Methanol wird aufgefangen und dessen Menge bestimmen (Dichte bei 20°C = 0,7869). Das Reaktionsgemisch wird bei 240°C gehalten, bis kein Methanol mehr anfällt. Dann wird auf auf unter 140°C abgekühlt.

Anschließend wird aminfunktionelles Polydimethylsiloxan zugegeben. Trimellithsäureanhydrid und 4,4'-Diaminodiphenylmethan wird als Feststoffgemisch, mindestens aber in wechselnden Portionen zugegeben. Dann wird vorsichtig wieder aufgeheizt. Die Diimidcarbonsäure bildet sich spontan und fällt dabei aus. Es wird so viel Solvesso 150 zugegeben, bis die Dispersion gut rührbar ist.

Dann wird zunächst langsam auf bis zu 240°C aufgeheizt. Das Zeitmaß wird vom Destillationsprozess bestimmt, die Kolonne sollte nicht ertrinken und die Kolonnenkopftemperatur sollte 105°C nicht übersteigen (etwas oberhalb des Siedepunkts von Wasser).

Ab 200°C werden Proben für die Messung von Säurezahl und Viskosität gewonnen. Die Titration der Säurezahl erfolgt mit 0,5 molarer, alkoholischer KOH gegen Phenolphtalein an einer Probe gelöst in vorneutralisiertem Lösemittel [DIN 53169]. Die Bestimmung der dynamischen Viskosität wird mit einer Probe nfA 60 % in Lösemittel durchgeführt.

Das Reaktionsgemisch wird bei 220°C gehalten, bis Säurezahl unter 20 mg KOH/g liegt.

Dann wird der Laborreaktor auf kurzen Weg geschaltet (absteigende Destillationsbrücke, am besten mit Bestimmung der Destillationstemperatur) und Schleppmittel und restliches Wasser abdestilliert. Es wird bei 220°C gehalten, bis die geplanten Kennzahlen erreicht sind.

Dann wird stark auf unter 170°C abgekühlt und ca. 5 - 10 % der geplanten Lösemittelmenge zugegeben und angelöst und weiter gekühlt. Unter 130°C wird Inhalt des Laborreaktors ausgetragen und in der Hauptmenge des Lösemittel weiter gelöst.

Einzustellende Endkennzahlen: nfA (60 min. 130°C): 70,0 ± 1,0 %
SZ (fest): 5 - 15 mg KOH/g
Viskosität (dyn.): _ ± 50 mPa·s (originale Anlösung, 23°C)

**Tabelle 4**

| **Rezeptur:** | | |
|---|---|---|
| **Bestandteile [g]** | | **Einwaagen [g]:** |
| Dimethylterephthalat | | **64,02** |
| Trimellithsäureanhydrid | | **84,48** |
| N,N'-Diaminodiphenylmethan | | **43,56** |
| Trishydroxyethylisocyanurat (THEIC) | | **96,18** |
| Glycerin | | **0,00** |
| Ethylenglykol | | **21,48** |
| Modifizierer: Aminfunktionelles PDMS z.B.: Aldrich: 480304 Poly[Dimethylsiloxane-co-(3-aminopropyl)methylsiloxane | | **30,86** |
| **Katalysatoren und Lösungsittel:** | | |
| Butyltitanat | | **0,99** |
| Solvanol PCA (oder Kresole/Phenole)bzw. Xylol | | **9,90** |
| Solvesso 150 | | **9,90** |
| **Summe, Einwaage Polymerbausteine** | | **340,58** |
| **Summe Methanol Freisetzung** | | 7,69 |
| **Summe H₂O Freisetzung** | | 2,88 |
| Modifikationsanteil [%] | | 10% |

### Beispiel 13

### Herstellung eines Polyamidimids mit einem 5%igen Anteil an Aminopropylmethylsiloxan-dimethylsiloxan-copolymer-Modifier

### PDMS-Modifier:

| **Code (ABCR)** | **Viskosität** | **Molekulargewicht [g/mol]** | **Mole % (Aminopropyl) MeSiO** |
|---|---|---|---|
| AMS-132 | 80-100 | 4500-5500 | 2,0-3,0 |
| AMS-152 | 120-180 | 7000-8000 | 4,0-5,0 |
| AMS-162 | 80-120 | 4000-5000 | 6,0-7,0 |

| | | | |
|---|---|---|---|
| AMS-132: (2-3% Aminopropylmethylsiloxan)-dimethylsiloxan-copolymer AMS-152: (4-5% Aminopropylmethylsiloxan)-dimethylsiloxan-copolymer AMS-162: (6-7% Aminopropylmethylsiloxan)-dimethylsiloxan-copolymer | | | |

In einem Laborreaktor aus Glas mit 0,5 L Gesamtvolumen, ausgestattet mit einer elektrischen Widerstandsheizung mit Temperaturkontrolle und -steuerung, mit einem Rührer und einem Rückflusskühler und der Einleitung von Stickstoff, werden 100g NMP, 50g Xylol und 45,6g Trimellithsäureanhydrid (TMA) eingewogen. Das TMA wird unter Rühren bei 70°C gelöst. Dann werden 4,6g des PDMS-Modifiers, der ca. 70-100 Si-Einheiten aufweist, innerhalb von 15min zudosiert.. Es wird auf 120°C erwärmt und dann eine Stunde bei 120°C gehalten zur Abreaktion des PDMS-Anteils. Es wird dann auf 40°C abgekühlt und dann werden innerhalb einer Stunde 58,7 g MDI zugegeben. Es wird innerhalb zwei Stunden auf 85°C erwärmt, und danach auf 130°C bis eine Viskosität von 5 Pa·s (gemessen im Platte-Kegel-Viskosimeter bei 30°C) erreicht wird. Dann wird abgekühlt bis 70°C und durch Zugabe von 1,2g Ethanol werden die noch freien Isocyanatfunktionen umgesetzt. Das entstehende Produkt hat einen Festkörper von 47-51 % (gemessen bei 1^{h} 130°C im Umluftofen): AMS-132: 51% FK; AMS-152: 47% FK; AMS-162: 48 % FK

### Applikation und Einbrennbedingungen:

Das mit AMS-132 funktionalisierte PAI wurde durch Zugabe von NMP auf einen FK von 40% eingestellt, mit 200µm appliziert, bei 220°C für 10min eingebrannt.

Das beschichtete Blech wurde am IFAM getestet.

### Beispiel 14

### Herstellung der wässrigen PUR-Dispersionen mit einem 5%igen Anteil an (2-3% Aminopropylmethylsiloxan)-dimethylsiloxan-copolymer als Modifier

### 14.1.

In einer wie unter Beispiel 13 beschriebenen Reaktionsapparatur werden 36,15g MDI in 74g Butanon bei 82°C gelöst. Danach werden 41,27g Priplast 1838, 1,43g Neopentylglykol (NPG), 6,46g Dimethanolpropionsäure (DMPA) und 7,93g Cyclohexyldimethanol (CHDM) nacheinander zugegeben und dieses Reaktionsgemisch wird 3h bei 82°C zur Reaktion gebracht. Nach Abkühlen auf Raumtemperatur wird 4,66g des Modifier AMS-132 über 15 min zugetropft. Nach weiteren 15min Rühren bei 50°C wird 1,77g Butanol zugegeben und für 30min bei 82°C gehalten. Nach Zugabe von 2,14g Dimethylethylethanolamin (DMEA) über 5min wird für weitere 30min bei 82°C gerührt. Nach Abkühlen auf 65°C wird 9,64g Butylglykol hinzugefügt und für 30 min gerührt. Danach erfolgt die Zugabe von 138,6g Wasser. Von der resultierenden Dispersion wird im Anschluss daran das Butanon am Rotationsverdampfer abdestilliert.

Das entstehende Produkt wird durch Zugabe von Wasser auf einen Festkörper von 40 % eingestellt (gemessen bei 1^{h} 130°C im Umluftofen).

Die PUR-Dispersion wurden auf einen Festkörper von 25% FK eingestellt, mit 200µm Nassfilmdicke aufgerakelt und bei 100°C für 10min eingebrannt.

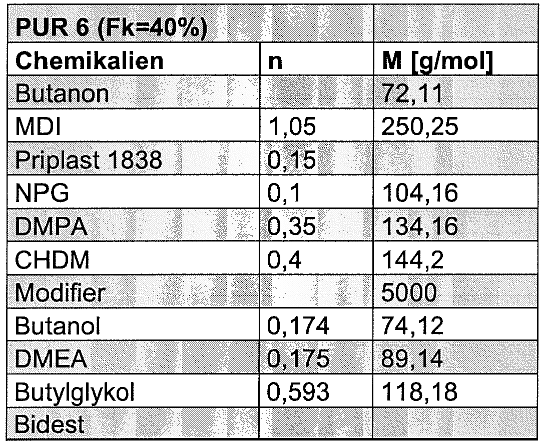

### 14.2.

In einer wie unter Beispiel 13 beschriebenen Reaktionsapparatur werden 52,55g MDI in 85,9g Butanon bei 82°C gelöst. Danach werden 40g Priplast 1838, 2,08g Neopentylglykol (NPG), 9,38g Dimethanolpropionsäure (DMPA) und 12,96g Cyclohexyldimethanol (CHDM) nacheinander zugegeben und dieses Reaktionsgemisch wird 3h bei 82°C zur Reaktion gebracht. Nach Abkühlen auf Raumtemperatur wird 6,13g des Modifier AMS-132 über 15 min zugetropft. Nach weiteren 15min Rühren bei 50°C wird 2,58g Butanol zugegeben und für 30min bei 82°C gehalten. Nach Zugabe von 3,12g Dimethylethylethanolamin (DMEA) über 5min wird für weitere 30min bei 82°C gerührt. Nach Abkühlen auf 65°C wird 14g Butylglykol hinzugefügt und für 30 min gerührt. Danach erfolgt die Zugabe von 176,6g Wasser. Von der resultierenden Dispersion wird im Anschluss daran das Butanon am Rotationsverdampfer abdestilliert.

Das entstehende Produkt wird durch Zugabe von Wasser auf einen Festkörper von 40 % eingestellt (gemessen bei 1^{h} 130°C im Umluftofen).

Die PUR-Dispersion wurden auf einen Festkörper von 30% FK eingestellt, mit 200µm Nassfilmdicke aufgerakelt und bei 100°C für 10min eingebrannt.

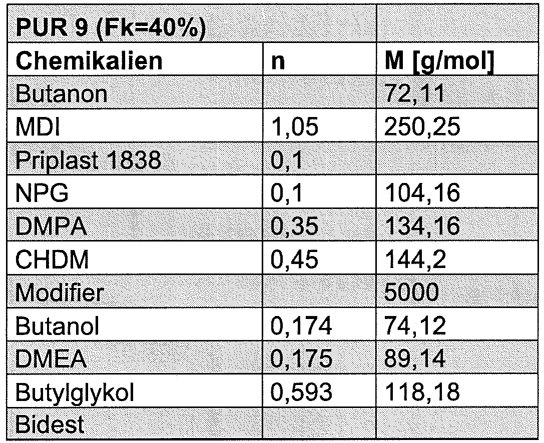

### 14.3.

In einer wie unter Beispiel 1) beschriebenen Reaktionsapparatur werden 52,55g MDI in 90g Butanon bei 82°C gelöst. Danach werden 30g Priplast 1838, 2,08g Neopentylglykol (NPG), 9,38g Dimethanolpropionsäure (DMPA) und 13,68g Cyclohexyldimethanol (CHDM) nacheinander zugegeben und dieses Reaktionsgemisch wird 3h bei 82°C zur Reaktion gebracht. Nach Abkühlen auf Raumtemperatur wird 5,66g des Modifier AMS-132 über 15 min zugetropft. Nach weiteren 15min Rühren bei 50°C wird 2,58g Butanol zugegeben und für 30min bei 82°C gehalten. Nach Zugabe von 3,12g Dimethylethylethanolamin (DMEA) über 5min wird für weitere 30min bei 82°C gerührt. Nach Abkühlen auf 65°C wird 14g Butylglykol hinzugefügt und für 30 min gerührt. Danach erfolgt die Zugabe von 164,4g Wasser. Von der resultierenden Dispersion wird im Anschluss daran das Butanon am Rotationsverdampfer abdestilliert.

Das entstehende Produkt wird durch Zugabe von Wasser auf einen Festkörper von 40 % eingestellt (gemessen bei 1^{h} 130°C im Umluftofen).

Die PUR-Dispersion wurden auf einen Festkörper von 30% FK eingestellt, mit 200µm Nassfilmdicke aufgerakelt und bei 100°C für 10min eingebrannt.

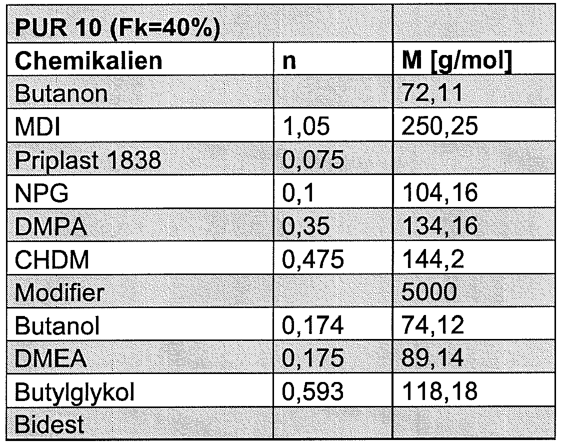

### Beispiel 15

### Synthesevorschrift einer In Situ Synthese einer PDMS-Gel-Partikel Dispersion

Die disperse Phase (NMP Position 1) und ein geeigneter Emulgator (Position 2) werden in einem 2 Liter Glasreaktor mit möglichst wandgängigem Ankerrührer und Rückflusskühler vorgelegt.

Das Vinyl funktionelle PDMS Präpolymer (Position 3) wird mit einem geeigneten Katalysator (Position 4) gemischt in einen Tropftrichter gefüllt.

Das Hydrid funktionelle PDMS Präpolymer (Position 5) wird in einen weiteren Tropftrichter gefüllt.

Beide Präpolymere werden über ca. 10 min unter intensivem Rühren zugetropft.

(Durch die Wahl des Katalysators kann die notwendige Reaktionstemperatur von Raumtemperatur bis über 100°C variiert werden.)

Es wird für weitere 5 Stunden intensiv gerührt, anschließend für 20 Stunden langsam nachgerührt.

**Beispiel-Rezeptur GP2002:**

| **Position** | **Rohstoff** | **Chem. Name** | Molmasse | Funktionalität | Equivalent [%] | **Massen [%]** |
|---|---|---|---|---|---|---|
| 1 | Disperse Phase | N-MethylPyrrolidon | | | | 79,496 |
| 2 | *Emulgator D. C. Fluid 190* | Silicon-Glycolcopolymer | | | | 0,3 |
| | | | | | | |
| **3** | **ABCR: DMS V05** | **Divinyl terminiertes Polydimethylsiloxane (Präpolymer)** | 800 | 2 | 47,3 | 5,6 |
| 4 | ABCR: SIP 6830.3 | Pt-Katalysator (Raumtemperatur aktiv) | | | | 0,204 |
| **5** | ***ABCR: HMS-082*** | ***Methylhydrosiloxane-Dimethylsiloxanecopolymer (Präpolymer)*** | *6000* | 6,49 | 52,7 | ***14,4*** |
| | | | | SUMME: | 100,00 | 100,00 |

Die erhaltene Dipersion vernetzter PDMS Gel Partikel wird in **konventionellen NMP-basierten Polyamidimid Elektroisolierlack eingearbeitet** (z.B. mittels Dispermaten oder Ultra-Turaxx).

Anteil der Dispersion in der "Abmischung":
1 - 75 % (PDMS Gel-Partikel Dispersion); bevorzugt 5 - 20%; besonders bevorzugt ca. 10%

Vorteile dieser Synthese und der erhaltenen PDMS Gelpartikel:
Durch Funktionalität und Molmasse der Präpolymere kann die Maschenweite der vernetzten Gelpartikel kontrolliert werden.
Durch die Verwendung Mono-vinyl-funktioneller Präpolymere können "Dendling Ends" (freie Polymer Enden) eingeführt werden und Gel-Partikel mit PDMS Brush Oberfläche erzeugt werden.
Durch die Verwendung eines Überschusses Di-vinyl-funktioneller Präpolymere können ebenfalls "Dendling Ends" (freie Polymer Enden) eingeführt werden und Gel-Partikel mit PDMS Brush Oberfläche erzeugt werden.
Aufgrund der Vernetzung innerhalb der Gelpartikel wird die Migrationsfähigkeit der Siloxane unterbunden.
Durch die In Situ Synthese in NMP kann die erhaltene Dispersion direkt in einen NMP basierten Elektroisolierlack eingearbeitet werden.
Die erhaltene Dipersion vernetzter PDMS Gel Partikel kann als Additiv in einen NMP basierten Elektroisolierlack eingearbeitet werden, aufgrund "fehlender" Polyether Segmente ist die Temperaturstabilität gegenüber konventionellen Gleitadditiven (Polyether-Polydimethylsiloxan-copolymeren) erhöht.

### Beispiel 16

### Applikationsversuche mit PDMS Gel Partikel Dispersionen:

Tabelle 5 zeigt Mischungen aus Elektroisolierlacken und PDMS Gel Partikeln für die Applikationsversuche mit anschließenden Reibungsprüfungen durchgeführt wurden.

Die PDMS Gel Partikel Dispersionen wurden mittels Ultra-Turaxx in einen **konventionellen NMP-basierten Polyamidimid Elektroisolierlack eingearbeitet** sowie in einen modifizierten Lack aus Polyamidimid-Polydimethylsiloxan-block-co-polymeren mit 20%PDMS Anteil.

**Tabelle 5**

| Anteil PDMS Gel Partikel Dispersion GP 2001 | Anteil PDMS Gel Partikel Dispersion GP 2002 | Anteil PDMS Gel Partikel Dispersion GP 2007 | Anteil nicht modifizierter Polyamidimid Lack 595/30 | Anteil modifizierter Polyamidimid Lack PAI LM 28C30C (20%PDMS Anteil) | | Reibungsprüfung Parusell CoF (DIN EN 60851) | Reibungsprüfung Scintilla [N] |
|---|---|---|---|---|---|---|---|
| - | 10% | - | 90% | - | | 0,115 | 5,5 |
| - | 40% | - | 60% | - | | 0,180 | 7,75 |
| - | 75% | - | 25% | - | | 0,195 | 8,0 |
| 40% | - | - | 60% | - | | 0,174 | 8,5 |
| 100% | - | - | - | - | | 0,241 | 7,25 |
| - | 10% | - | - | 90% | | 0,127 | 5,5 |
| - | 40% | - | - | 60% | | 0,139 | 7,5 |
| - | 75% | - | - | 25% | | 0,141 | 7,0 |
| Vergleich: reines PAI | | | 100% | | | 0,230 | 14,0 |

### Prüfung der Gleitfähigkeit

Neben der Prüfung der Wärmebeständigkeiten und elektrischen Eigenschaften wurde die Gleitfähigkeit nach zwei Methoden bestimmt.

### 1. Messung des Oberflächenwiderstands nach Parusell CoF

Bei der Messung des Oberflächenwiderstands nach Parusell CoF wird ein Lackdraht zwischen einer polierten Stahlfläche und einem aufliegendem Stahlschlitten durchgeführt. Gemessen wird die Kraft die auf den Stahlschlitten wirkt. Die Angabe erfolgt als Reibungskoeffizient (dimensionslos). Kleine Werte bedeuten geringere Reibung (Tensiometrie, siehe DIN EN 60851).

### 2. Messung des Reibungswiderstands nach Scintilla

Ein Lackdraht wird mit höherer Geschwindigkeit unter einem Stahlblock mit bestimmter Auflagefläche durchgezogen. Es wird die Kraft gemessen, die durch die Reibung erzeugt wird, Angabe in Newton (N).

## Patentansprüche

1. Elektroisolierlack, der ein Polymer enthält, umfassend ein Basispolymer und Modifizierungseinheiten, die nach Aushärtung des Polymers mit dem Basispolymer unverträglich sind,
worin das Basispolymer ausgewählt ist aus der Gruppe bestehend aus Polyamidimiden, Polyesterimiden, Polyamiden, Polyurethanen, Polyimiden, Polyesteramidimiden, Polyepoxiden, Mischungen oder Kombinationen davon, worin die Modifizierungseinheiten Polydialkylsiloxane sind, welche 40 bis 500 Si-Einheiten aufweisen.

2. Elektroisolierlack nach Anspruch 1, **dadurch gekennzeichnet, dass** nach Aushärtung des Polymers an der Oberfläche des ausgehärteten Lacks separate Bereiche vorliegen.

3. Elektroisolierlack nach Anspruch 1 oder 2, **dadurch gekennzeichnet, dass** die Modifizierungseinheiten Polydimethylsiloxane sind.

4. Elektroisolierlack nach Anspruch 1, **dadurch gekennzeichnet, dass** das Basispolymer ein Polyamidimid oder/und ein Polyesterimid, insbesondere ein Polyamidimid ist.

5. Ausgehärteter Elektroisolierlack erhältlich durch thermisches Aushärten eines Elektroisolierlacks nach einem der Ansprüche 1 bis 4, wobei an der Oberfläche des ausgehärteten Elektroisolierlacks separate Bereiche vorliegen.

6. Verfahren zur Herstellung eines Elektroisolierlacks nach einem der Ansprüche 1 bis 4, **dadurch gekennzeichnet, dass** ein erster modifizierter Baustein, z. B. ein Monomer oder ein Präpolymer, welcher mindestens eine Modifizierungseinheit aufweist, mit mindestens einem zweiten Monomer polymerisiert wird, um ein Polymer mit Modifizierungseinheiten zu erhalten, das zusammen mit einem Lösungsmittel und gegebenenfalls Additiven zu einem Elektroisolierlack formuliert wird.

7. Verwendung des Elektroisolierlacks nach einem der Ansprüche 1 bis 4 zum Auftragen auf einen Draht, insbesondere auf einen Kupferdraht.

8. Verwendung nach Anspruch 7, wobei der Elektroisolierlack auf einen Draht aufgebracht wird und einem Einbrennprozess unterzogen wird, wobei an der Oberfläche des ausgehärteten Elektroisolierlacks separate Bereiche vorliegen.

9. Verwendung nach Anspruch 7 oder 8, **dadurch gekennzeichnet, dass** der Elektroisolierlack nach einem der Ansprüche 1 bis 4 als äußere Schicht oder Schichten auf einen Draht mit Elektroisolierlack ohne Modifizierungseinheiten aufgebracht wird.

10. Draht, insbesondere Kupferdraht beschichtet mit einem Elektroisolierlack nach Anspruch 5.

11. Draht, insbesondere Kupferdraht, der einen Elektroisolierlack ohne Modifizierungseinheiten und als äußere Schicht oder Schichten einen Elektroisolierlack nach Anspruch 5 aufweist.

12. Spule, umfassend einen Draht nach einem der Ansprüche 10 oder 11.

13. Elektroisolierlack, umfassend ein Polymer und Polydialkylsiloxan-Gelpartikel, worin das Polymer aus der Gruppe bestehend aus Polyamidimiden, Polyesterimiden, Polyurethanen, Polyestern, Polyamiden, Polyimiden, Polyesteramidimiden, Mischungen oder Kombinationen davon ausgewählt ist, wobei die Polydialkylsiloxane 40 bis 500 Si-Einheiten aufweisen.

14. Elekroisolierlack, nach Anspruch 13, **dadurch gekennzeichnet, dass** nach Aushärtung des Polymers an der Oberfläche des ausgehärteten Lacks separate Bereiche vorliegen.

15. Elektroisolierlack, nach Anspruch 13 oder 14, umfassend Polydimethylsiloxan-Gelpartikel.

16. Elektroisolierlack, nach einem der Ansprüche 13 bis 15, **dadurch gekennzeichnet, dass** das Polymer ein Polyamidimid ist.

17. Ausgehärteter Elektroisolierlack, erhältlich durch thermisches Aushärten eines Elektroisolierlackes nach einem der Ansprüche 13 bis 16.

18. Verfahren zur Herstellung eines Elektroisolierlackes nach einem der Ansprüche 13 bis 16, **dadurch gekennzeichnet, dass** eine Polysiloxan-Gel-partikel-Dispersion und ein ein Polymer enthaltender Lack gemischt werden.

19. Verfahren nach Anspruch 18, **dadurch gekennzeichnet, dass** es sich bei dem ein Polymer enthaltenden Lack um einen herkömmlichen Lack oder um einen Lack nach einem der Ansprüche 1 bis 4 handelt.

20. Verwendung von Polydialkylsiloxan-Gelpartikeln als Bestandteil in einem Elektroisolierlack nach Anspruch 1.

21. Verwendung nach Anspruch 20 zur Verringerung des Reibungswiderstandes.

22. Verwendung nach Anspruch 21 oder 22, **dadurch gekennzeichnet, dass** Polydimethylsiloxan-Gelpartikel eingesetzt werden.

23. Verwendung des Elektroisolierlacks nach einem der Ansprüche 13 bis 16 zum Auftragen auf einen Draht, insbesondere auf einen Kupferdraht.

24. Verwendung nach Anspruch 23, **dadurch gekennzeichnet, dass** der Elektroisolierlack nach einem der Ansprüche 13 bis 16 als äußere Schicht oder Schichten auf einen Draht mit Elektroisolierlack ohne Modifizierungseinheiten aufgebracht wird.

25. Draht, insbesondere Kupferdraht beschichtet mit einem Elektroisolierlack nach Anspruch 17.

26. Draht, insbesondere Kupferdraht, der einen Elektroisolierlack ohne Modifizierungseinheiten und als äußere Schicht oder Schichten einen Elektroisolierlack nach Anspruch 17 aufweist.

27. Spule, umfassend einen Draht nach einem der Ansprüche 25 oder 26.

## Claims

1. An electrically insulating coating containing a polymer which comprises a base polymer and modifier units that are incompatible with the base polymer after the polymer is cured,
in which the base polymer is selected from the group consisting of polyamide-imides, polyester-imides, polyamides, polyurethanes, polyimides, polyesteramide-imides, polyepoxides, mixtures or combinations thereof, wherein the modifier units are polydialkylsiloxanes containing 40 to 500 Si units.

2. The electrically insulating coating according to claim 1, **characterized in that** after the polymer is cured, separate zones are present on the surface of the cured coating.

3. The electrically insulating coating according to claim 1 or 2, **characterized in that** the modifier units are polydimethylsiloxanes.

4. The electrically insulating coating according to claim 1, **characterized in that** the base polymer is a polyamide-imide and/or a polyester-imide, particularly a polyamide-imide.

5. A cured electrically insulating coating that can be obtained by thermal curing of an electrically insulating coating according to any one of claims 1 to 4, wherein separate zones are present on the surface of the cured electrically insulating coating.

6. A method for producing an electrically insulating coating according to any one of claims 1 to 4, **characterized in that** a first modified component, such as a monomer or a prepolymer that contains at least one modifier unit is polymerized with at least one second monomer to obtain a polymer with modifier units which is formulated together with a solvent and optionally additives to yield an electrically insulating coating.

7. Use of the electrically insulating coating according to any one of claims 1 to 4 for application to a wire, particularly a copper wire.

8. Use according to claim 7, wherein the electrically insulating coating is applied to a wire and undergoes a baking process, wherein separate zones are present on the surface of the cured electrically insulating coating.

9. Use according to claim 7 or 8, **characterized in that** the electrically insulating coating according to any one of claims 1 to 4 is applied as the outer layer or layers to a wire that has an electrically insulating coating without modifier units.

10. A wire, particularly copper wire coated with an electrically insulating coating according to claim 5.

11. The wire, particularly copper wire having an electrically insulating coating without modifier units and an electrically insulating coating according to claim 5 as the outer layer or layers.

12. A coil comprising a wire according to either of claims 10 or 11.

13. An electrically insulating coating comprising a polymer and polydialkylsiloxane gel particles, in which the polymer is selected from the group consisting of polyamide-imides, polyester-imides, polyurethanes, polyesters, polyamides, polyimides, polyesteramide-imides, mixtures or combinations thereof, wherein the polydialkylsiloxanes contain 40 to 500 Si units.

14. The electrically insulating coating according to claim 13, **characterized in that** after the polymer is cured, separate zones are present on the surface of the cured coating.

15. The electrically insulating coating according to claim 13 or 14, comprising polydimethylsiloxane gel particles.

16. The electrically insulating coating according to any one of claims 13 to 15, **characterized in that** the polymer is a polyamide-imide.

17. A cured electrically insulating coating that can be obtained by thermal curing of an electrically insulating coating according to any one of claims 13 to 16.

18. A method for producing an electrically insulating coating according to any one of claims 13 to 16, **characterized in that** a polysiloxane gel particle dispersion and a coating containing a polymer are mixed.

19. The method according to claim 18, **characterized in that** the coating containing a polymer is a conventional coating or a coating according to any one of claims 1 to 4.

20. Use of polydialkylsiloxane gel particles as a component in an electrically insulating coating according to claim 1.

21. Use according to claim 20 for reducing frictional resistance.

22. Use according to claim 21 or 22, **characterized in that** polydimethylsiloxane gel particles be used.

23. Use of the electrically insulating coating according to any one of claims 13 to 16 for application to a wire, particularly a copper wire.

24. Use according to claim 23, **characterized in that** the electrically insulating coating according to any one of claims 13 to 16 is applied as the outer layer or layers to a wire having an electrically insulating coating without modifier units.

25. A wire, particularly copper wire coated with an electrically insulating coating according to claim 17.

26. The wire, particularly copper wire having an electrically insulating coating without modifier units and an electrically insulating coating according to claim 17 as the outer layer or layers.

27. A coil comprising a wire according to either of claims 25 or 26.

## Revendications

1. Vernis d'isolation électrique contenant un polymère comprenant un polymère de base et des unités de modification lesquelles deviennent, suite au durcissement dudit du polymère, incompatibles avec ledit polymère de base,
ledit polymère de base étant choisi dans le groupe constitué de polyamide-imides, polyester-imides, polyamides, polyuréthanes, polyimides, polyesteramide-imides, polyépoxydes, de leurs mélanges et combinaisons, lesdites unités de modification étant des polydialkylsiloxanes comportant 40 à 500 unités de Si.

2. Vernis d'isolation électrique selon la revendication 1, **caractérisé en ce que**, suite au durcissement dudit polymère, la surface du vernis durci présente des zones distinctes.

3. Vernis d'isolation électrique selon les revendications 1 ou 2, **caractérisé en ce que** lesdites unités de modification sont des polydiméthylsiloxanes.

4. Vernis d'isolation électrique selon la revendication 1, **caractérisé en ce que** ledit polymère de base est un polyamide-imide ou/et un polyester-imide, plus particulièrement un polyamide-imide.

5. Vernis d'isolation électrique durci, lequel peut être obtenu par durcissement thermique d'un vernis d'isolation électrique selon l'une des revendications 1 à 4, la surface du vernis d'isolation électrique durci présentant des zones distinctes.

6. Procédé de fabrication d'un vernis d'isolation électrique selon l'une des revendications 1 à 4, **caractérisé en ce qu'**un premier élément modifié, s'agissant par exemple d'un monomère ou d'un prépolymère, lequel est pourvu d'au moins une unité de modification, est polymérisé avec au moins un deuxième monomère, pour obtenir un polymère comportant des unités de modification qui est formulé ensemble avec un solvant et éventuellement des additifs pour ainsi obtenir un vernis d'isolation électrique.

7. Utilisation d'un vernis d'isolation électrique selon l'une des revendications 1 à 4 pour appliquer ce dernier sur un fil métallique, notamment sur un fil en cuivre.

8. Utilisation selon la revendication 7, ledit vernis d'isolation électrique étant appliqué sur un fil métallique puis soumis à un processus de cuisson, la surface du vernis d'isolation électrique durci présentant des zones distincts.

9. Utilisation selon les revendications 7 ou 8, **caractérisée en ce que** le vernis d'isolation électrique selon l'une des revendications 1 à 4 est appliqué en tant que couche(s) extérieure(s) sur un fil métallique comportant un vernis d'isolation électrique dépourvu d'unités de modification.

10. Fil métallique, plus particulièrement fil de cuivre, revêtu d'un vernis d'isolation électrique selon la revendication 5.

11. Fil métallique, plus particulièrement fil de cuivre comportant un vernis d'isolation électrique dépourvu d'unités de modification et, en tant que couche(s) extérieure(s), un vernis d'isolation électrique selon la revendication 5.

12. Bobine, comprenant un fil métallique selon l'une des revendications 10 ou 11.

13. Vernis d'isolation électrique, comprenant un polymère et des particules de gel de polydialkylsiloxane, ledit polymère étant choisi dans le groupe constitué de polyamide-imides, polyester-imides, polyuréthanes, polyesters, polyamides, polyimides, polyesteramide-imides, de leurs mélanges et combinaisons, lesdites unités de modification étant des polydialkylsiloxanes comportant 40 à 500 unités de Si.

14. Vernis d'isolation électrique selon la revendication 13, **caractérisé en ce que**, suite au durcissement dudit polymère, la surface du vernis durci présente des zones distinctes.

15. Vernis d'isolation électrique selon les revendications 13 ou 14, comprenant des particules de gel de polydiméthylsiloxane.

16. Vernis d'isolation électrique selon l'une des revendications 13 à 15, **caractérisé en ce que** ledit polymère est un polyamide-imide.

17. Vernis d'isolation électrique durci, pouvant être obtenu par durcissement thermique d'un vernis d'isolation électrique selon l'une des revendications 13 à 16.

18. Procédé de fabrication d'un vernis d'isolation électrique selon l'une des revendications 13 à 16, **caractérisé en ce que** l'on mélange une dispersion de particules de gel de polysiloxane et un vernis contenant un polymère.

19. Procédé selon la revendication 18, **caractérisé en ce que** le vernis contenant un polymère est un vernis traditionnel ou un vernis selon l'une des revendications 1 à 4.

20. Utilisation de particules de gel de polydialkylsiloxane en tant que composant dans un vernis d'isolation électrique selon la revendication 1.

21. Utilisation selon la revendication 20 pour réduire la résistance au frottement.

22. Utilisation selon les revendications 21 ou 22, **caractérisée en ce que** l'on met en oeuvre des particules de gel de polydiméthylsiloxane.

23. Utilisation du vernis d'isolation électrique selon l'une des revendications 13 à 16 pour alliquer ce dernier sur un fil métallique, notamment sur un fil en cuivre.

24. Utilisation selon la revendication 23, **caractérisée en ce que** le vernis d'isolation électrique selon l'une des revendications 13 à 16 est appliqué en tant que couche(s) extérieure(s) sur un fil métallique comportant un vernis d'isolation électrique dépourvu d'unités de modification.

25. Fil métallique, plus particulièrement fil de cuivre, revêtu d'un vernis d'isolation électrique selon la revendication 17.

26. Fil métallique, plus particulièrement fil de cuivre, comportant un vernis d'isolation électrique dépourvu d'unités de modification et, en tant que couche(s) extérieure(s), un vernis d'isolation électrique selon la revendication 17.

27. Bobine, comprenant un fil métallique selon l'une des revendications 25 ou 26.
